(19) Europäisches Patentamt
European Patent Office
Office européen des brevets

(11) EP 2 899 171 A1

(12) **EUROPÄISCHE PATENTANMELDUNG**

(43) Veröffentlichungstag:
**29.07.2015 Patentblatt 2015/31**

(51) Int Cl.:
***C04B 24/26*** *(2006.01)* ***C04B 28/02*** *(2006.01)*

(21) Anmeldenummer: **14152156.7**

(22) Anmeldetag: **22.01.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Construction Research & Technology GmbH**
**83308 Trostberg (DE)**

(72) Erfinder: **Die Erfindernennung liegt noch nicht vor**

(74) Vertreter: **Reitstötter Kinzebach**
**Patentanwälte**
**Sternwartstrasse 4**
**81679 München (DE)**

(54) **Additiv für hydraulisch abbindende Massen**

(57) Die vorliegende Erfindung betrifft ein Additiv für hydraulisch abbindende Massen, umfassend eine kolloid-disperse Zubereitung wenigstens eines Salzes eines ein- oder mehrwertigen Metallkations und wenigstens einer Verbindung, die ein Anion freizusetzen vermag, das mit dem Metallkation ein schwerlösliches Salz bildet, und wenigstens eines polymeren sulfonierten Dispergiermittels. Das Additiv ist insbesondere als Konsistenzhalter geeignet.

EP 2 899 171 A1

## Beschreibung

Die Erfindung betrifft ein Additiv für hydraulisch abbindende Massen, das insbesondere als Konsistenzhalter (Slump retainer) geeignet ist.

Hydraulisch abbindende Massen, die wässrige Aufschlämmungen von hydraulischem und/oder mineralischem Bindemittel mit pulverförmigen anorganischen und/oder organischen Substanzen, wie Tonen, Silikatmehlen, Kreiden, Rußen, oder Gesteinsmehlen enthalten, finden zum Beispiel in Form von Betonen, Mörteln oder Gipsen breite Anwendung.

Es ist bekannt, dass hydraulisch abbindende Massen zur Verbesserung ihrer Verarbeitbarkeit, das heißt Knetbarkeit, Streichfähigkeit, Spritzbarkeit, Pumpbarkeit oder Fließfähigkeit, Additive, die polymere Dispergiermittel umfassen, zugesetzt werden. Derartige Additive können die Bildung von Feststoffagglomeraten verhindern, bereits vorhandene und durch Hydratation neu gebildete Teilchen dispergieren und auf diese Weise die Verarbeitbarkeit verbessern. Additive, die polymere Dispergiermittel umfassen, werden insbesondere auch gezielt bei der Herstellung von hydraulisch abbindenden Massen, die hydraulische und/oder mineralische Bindemittel wie (Portland)zement, Hüttensand, Flugasche, Silikastaub, Metakaolin, natürliche Puzzolane, gebrannten Ölschiefer, Calcium-Aluminat-Zement, Kalk, Gips, Halbhydrat, Anhydrit oder Mischungen zweier oder mehrerer dieser Komponenten enthalten, eingesetzt.

Um diese hydraulisch abbindenden Massen auf der Basis der genannten Bindemittel in eine gebrauchsfertige, verarbeitbare Form zu überführen, ist in der Regel wesentlich mehr Anmachwasser erforderlich, als für den nachfolgenden Erhärtungsprozess notwendig wäre. Im Betonkörper verringern die durch das überschüssige, später verdunstende Wasser gebildeten Hohlräume die mechanische Festigkeit und Beständigkeit.

Um den Anteil überschüssigen Wassers bei einer vorgegebenen Verarbeitungskonsistenz zu reduzieren und/oder die Verarbeitbarkeit bei einem vorgegebenen Wasser/Bindemittel-Verhältnis zu verbessern, werden Additive eingesetzt, die im Allgemeinen als Wasserreduktionsmittel oder Fließmittel bezeichnet werden. Als Wasserreduktions- oder Fließmittel werden in der Praxis insbesondere durch radikalische Polymerisation erhaltene, auf carboxylgruppenhaltigen Monomeren und auf polyethylenglykolhaltigen olefinischen Monomeren basierende Polymere eingesetzt, die auch als Polycarboxylatether (abgekürzt als "PCE") bezeichnet werden. Diese Polymere weisen eine carboxylgruppenhaltige Hauptkette mit polyethylenglykolhaltigen Seitenketten auf und werden auch als Kammpolymere bezeichnet. Eine weitere Klasse von wichtigen Fließmitteln basiert auf sulfonsäurehaltigen Polykondensaten. Beispielhaft genannt seien Beta-Naphthalinsulfonat-Formaldehyd-Kondensate (BNS), sulfonierte Melamin-Formaldehyd-Kondensate oder Aceton-Formaldehyd-Kondensate. Ebenso eignen sich Ligninsulfonate, welche als Nebenprodukt der Papierherstellung anfallen als Fließmittel.

Von den Wasserreduktions- und Fließmitteln, die bei relativ geringer Dosierung eine Verflüssigung frisch angesetzten Betons bewirken, grenzt man die sogenannten Konsistenzhalter, bzw. Setzmaßaufrechterhalter, die im folgenden als "Slump-retainer" bezeichnet werden, ab, die nur bei relativ hoher Dosierung die gleiche anfängliche Verflüssigung erreichen, aber ein konstantes Ausbreitmaß über die Zeit bewirken. Im Gegensatz zur Zugabe von Wasserreduktionsmitteln ermöglicht die Zugabe von Slump retainern eine auf beispielsweise bis zu 90 Minuten nach dem Anmischen des Betons ausgedehnte, gute Verarbeitbarkeit, während die Verarbeitbarkeit mit Wasserreduktionsmitteln meist schon nach 10 bis 30 Minuten deutlich abnimmt.

Meist werden in der Praxis Wasserreduktionsmittel und Slump retainer in Formulierungen in wechselnden Anteilen eingesetzt. Allerdings ist es durch formulierungstechnische Maßnahmen nur sehr eingeschränkt möglich die Aufrechterhaltung des Setzmaßes (Slump-retention) zu verbessern, insbesondere ist es schwierig die Aufrechterhaltung des Setzmaßes zu verbessern ohne dabei weitere Betoneigenschaften nachteilig zu beeinflussen. So führt eine Formulierung mit Slump retainern zwar zu einem besseren Slumperhalt, wie beispielsweise in WO 2009/004348 im Zusammenhang mit Phosphonaten und in JP 57067057A im Zusammenhang mit Zuckern offenbart ist. Allerdings gewinnt man die Aufrechterhaltung des Setzmaßes nur auf Kosten schlechterer Frühfestigkeiten.

Ein beträchtlicher Nachteil von sulfonierten Dispergiermitteln ist ihre äußerst schwache Erhaltung der Betonverarbeitbarkeit über die Zeit. Insbesondere ist es nicht möglich, diesen Nachteil durch synthetische Maßnahmen zu verbessern, wie es bei Kammpolymeren der Fall ist. Ein neuerer Ansatz ist die Formulierung von BNS mit Acrylsäureesterhaltigen Dispergiermitteln. So beschreibt die US 2013/0231415 eine Formulierung von BNS mit Hydroxyethylacrylathaltigen PEG-freien Dispergiermitteln beschrieben. Dieser Ansatz hat jedoch den Nachteil, dass die entsprechenden nachverflüssigenden Polymere deutlich teurer sind als BNS oder andere sulfonierte Dispergiermittel. Außerdem haben die Polymere verzögernde Eigenschaften und beeinträchtigen daher die Frühfestigkeitsentwicklung des Betons.

In der US 7,879,146 B2 wird die Herstellung von Doppelschicht-Hydroxiden basierend auf zweiwertigen Metallkationen (bspw. $Ni^{2+}$, $Zn^{2+}$, $Mn^{2+}$ und/oder $Ca^{2+}$ und dreiwertigen Metallkationen (bspw. $Al^{3+}$, $Ga^{3+}$, $Fe^{3+}$ und/oder $Cr^{3+}$) offenbart. Die Doppelschicht-Hydroxide können Anionen wie Nitrate, Hydroxide, Carbonate, Sulfate und Chloride interkalieren. Die anorganischen Produkte werden über mehrere Stunden bei erhöhter Temperatur (65 °C) behandelt und dann im Vakuum bei 100 °C getrocknet. In die so hergestellten Doppelschicht-Hydroxide werden in einem sich anschließenden Ionenenaustauschprozess organische Moleküle wie beispielsweise Naphthalensulfonate, Derivate der

Nitrobenzoesäure, Salicylsäure, Zitronensäure, Polyacrylsäuren, Polyvinylalkohol und ein Superplasticizer auf Basis eines Natriumsalzes von Polynaphthalinsulfonsäure (PNS) interkaliert. Die anorganisch durch Doppelschicht-Hydroxide modifizierten Natriumsalze der Polynaphthalinsulfonsäure (PNS) bewirken im Mörteltest nur eine leicht verbesserte Aufrechterhaltung des Setzmaßes. Diese Verbesserung ist für viele Anwendungen nicht ausreichend.

Einen ganz analogen Ansatz beschreibt EP 2 412 689 für die Kombination aus schichtförmigen Doppelhydroxid und einem Polyurethan-Copolymer. Nachteilig sind die langen Synthesedauern von > 6h und die benötigten hohen Temperaturen von 80 bis 100°C bei der hydrothermalen Herstellung der Doppelschichthydroxide. Weiterhin ist man auch bei dieser Methode daran gebunden, dass die Eigenschaften des Hybrids in einer komplizierten Synthese in einer chemischen Produktionsanlage festgelegt werden.

American Concrete Institute, SP (1997), 225-248 beschreibt das Co-Präzipität aus Ca(OH)2, Natrium-Beta-Naphthalinsulfonat-Formaldehyd-Kondensat und Natriumaluminat. Unter den beschriebenen Bedingungen bilden sich mit BNS intercalierte LDH Strukturen wie durch XRD und SEM Untersuchungen gezeigt wird.

Guisuanyan Xuebao (2009), 37(7), 1103-1109 und CN 101337785 beschreiben die Synthese von mit BNS interkalierten Mg-Al Doppelschicht-Hydroxiden, welche analog US7879146 erhalten werden. Der beschriebene Effekte zur Erhaltung der Verabeitbarkeit ist sehr gering und nicht ausreichend für viele Anwendungen.

Zairyo (1987), 36(405), 617-23 beschreibt die Reaktion von $Ca(OH)_2$ und Al-tris-(isopropoxide) in Gegenwart von BNS. Die entstehenden BNS haltigen Hydratphasen zeigen keinen Einfluß auf das Trocknungsschwinden.

DE 26 09 703 beschreibt Organocalciumaluminate auf Basis eines Calciumsalzes einer Aryl- oder Alkarylsulfonsäure, die gegebenfalls mit Formaldehyd kondensiert sein kann und ihre Verwendung als Fliessmittel für hydraulische Bindemittel.

Die vielfältigen Anforderungen an das Leistungsprofil der Betone sind länderspezifischen Regulierungen und Normierungen unterworfen und stark abhängig von den an der jeweiligen Baustelle vorherrschenden Bedingungen, wie etwa den Witterungsbedingungen. Besonders die Aufrechterhaltung des Setzmaßes hängt stark von den an der jeweilgen Baustelle vorherrschenden Bedingungen ab.

Da von Baustelle zu Baustelle ganz unterschiedliche Witterungsbedingungen vorherrschen können, besteht in der Bauindustrie das Bedürfnis, die vorstehend beschriebenen Mängel des Stands der Technik zu beheben. Der Erfindung liegt daher die Aufgabe zugrunde, effiziente Slump retainer bereitzustellen. Diese sollen in der Lage sein, unter den auf der Baustelle vorherrschenden Bedingungen eine ausreichende Aufrechterhaltung des Setzmaßes zu gewährleisten ohne andere Betoneigenschaften, wie z. B. die Frühfestigkeit, zu beeinträchtigen.

Diese Aufgabe wird gemäß einer ersten Ausführungsform gelöst durch ein

1. Additiv für hydraulisch abbindende Massen, umfassend eine kolloid-disperse Zubereitung wenigstens eines Salzes wenigstens eines ein- oder mehrwertigen Metallkations, wenigstens einer Verbindung, die ein Anion freizusetzen vermag, das mit dem Metallkation ein schwerlösliches Salz bildet, und wenigstens eines polymeren sulfonierten Dispergiermittels, das anionische und/oder anionogene Gruppen enthält,
wobei das Metallkation ausgewählt ist unter
$Ca^{2+}$, $Al^{3+}$, $Fe^{3+}$, $Fe^{2+}$, $Zn^{2+}$, $Mn^{2+}$, $Cu^{2+}$, $Mg^{2+}$, $Sr^{2+}$, $Ba^{2+}$, $Li^{+}$ und Gemischen davon,
und das Metallkation in einer Menge entsprechend der folgenden Formel (a) vorliegt:

$$0.1 < \frac{\sum_i z_{K,i} * n_{K,i}}{\sum_j z_{S,j} * n_{S,j}} < 30 \quad (a)$$

wobei

$Z_{K,i}$ für den Betrag der Ladungszahl des Metallkations steht,
$n_{K,i}$ für die Molzahl des eingewogenen Metallkations steht,
$z_{S,j}$ für den Betrag der Ladungszahl der im polymeren Dispergiermittel enthaltenen anionischen und anionogenen Gruppen,
$n_{S,j}$ für die Molzahl der im eingewogenen polymeren sulfonierten Dispergiermittel enthaltenen anionischen und anionogenen Gruppen steht,

die Indices i und j voneinander unabhängig und eine ganze Zahl größer als 0 sind, i für die Anzahl verschiedenartiger mehrwertiger Metallkationen steht und j für die Anzahl verschiedenartiger im polymeren Dispergiermittel enthaltener anionischer und anionogener Gruppen steht, wobei z so definiert ist, dass die Ladungszahl für Kationen sich stets auf die volle formale Ladung bezieht, d.h. $z_{Fe}(FeCl_3)=3$, $z_{Fe}(FeCl_2)=2$. z steht für den Betrag der formalen Ladung der Anionen bei maximaler Deprotonierung, d.h. $z_{PO4}(H_3PO_4)=z_{PO4}(Na_3PO_4)=3$, oder $z_{CO3}(Na_2CO_3)=2$. Im Fall

von Aluminat wird gesetzt $z_{AlO2}(NaAlO_2)=z_{AlO2}(NaAl(OH)_4)=1$, im Fall von Silikat wird für alle Silikatspezies gesetzt $z_{SiO3}(Na_2SiO_3)=2$.

2. Additiv nach Anspruch 1, wobei das Metallkation ausgewählt ist unter $Ca^{2+}$, $Mg^{2+}$, $Al^{3+}$, $Fe^{3+}$, $Fe^{2+}$, $Mn^{2+}$, $Zn^{2+}$, $Li^{+}$ und Gemischen davon.

3. Additiv nach Anspruch 1, wobei das Metallkation ausgewählt ist unter $Ca^{2+}$, $Mg^{2+}$, $Al^{3+}$, $Fe^{3+}$, $Fe^{2+}$ und Gemischen davon.

4. Additiv nach Anspruch 1, wobei das Metallkation ausgewählt ist unter $Ca^{2+}$, $Mg^{2+}$, $Al^{3+}$, $Fe^{3+}$ und Gemischen davon.

5. Additiv nach Anspruch 1, wobei das Metallkation $Ca^{2+}$ ist.

6. Additiv nach einer der vorhergehenden Ausführungsformen, wobei das Verhältnis nach Formel (a) im Bereich von 0.5 bis 30, vorzugsweise 1 bis 10 liegt.

7. Additiv nach Ausführungsform 6, wobei das Verhältnis nach Formel (a) im Bereich von 1 bis 8 oder 1,1 bis 8, bevorzugt 1 bis 6 oder 1,1 bis 6 oder 1,2 bis 6 liegt.

8. Additiv nach Ausführungsform 6 oder 7, wobei das Verhältnis nach Formel (a) im Bereich von 1,01 bis 5 oder 1,1 bis 5 oder 1,2 bis 5 oder 1,25 bis 5, liegt.

9. Additiv nach einer der vorhergehenden Ausführungsformen, wobei das Anion in einer Menge entsprechend der folgenden Formel (b) vorliegt:

$$0.01 \leq \frac{\sum_l z_{A,l} \cdot n_{A,l}}{\sum_i z_{K,i} \cdot n_{K,i}} < 3 \qquad \text{(b)}$$

wobei

$Z_{K,i}$ für den Betrag der Ladungszahl des mehrwertigen Metallkations steht,
$n_{K,i}$ für die Molzahl des eingewogenen mehrwertigen Metallkations steht,
$z_{A,l}$ für die Ladungszahl des eingewogenen Anions steht,
$n_{A,l}$ für die Molzahl des eingewogenen Anions steht,

die Indices i und l voneinander unabhängig und eine ganze Zahl größer als 0 sind, i für die Anzahl verschiedenartiger Metallkationen steht und l für die Anzahl verschiedenartiger Anionen, welche mit dem Metallkation ein schwerlösliches Salz bilden können, steht.

10. Additiv nach Ausführungsform 9, wobei das Verhältnis nach Formel (b) im Bereich von 0,01 bis 2, bevorzugt 0,1 bis 1,5, liegt.

11. Additiv nach einer der vorhergehenden Ausführungsformen , wobei das Anion ausgewählt ist unter Aluminat, Ferrat, Carbonat, Oxalat, Silikat, Phosphat, Polyphosphat, Phosphit, Borat, Sulfat und Gemischen davon.

12. Additiv nach Ausführungsform 11, wobei das Anion ausgewählt ist unter Aluminat, Ferrrat, Carbonat, Silikat, Phosphat und Gemischen davon.

13. Additiv nach Ausführungsform 12, wobei das Anion Aluminat ist.

14. Additiv nach Ausführungsform 13, wobei das Verhältnis nach Formel (b) im Bereich von 0,01 bis 2, insbesondere 0,1 bis 1 liegt.

15. Additiv nach einer der vorhergehenden Ausführungsformen, wobei das sulfonierte polymere Dispergiermittel ausgewählt ist unter sulfonierten Keton-Formaldehyd-Kondensaten, sulfonierten Melaminsulfonat-Formaldehyd-Kondensaten, Naphthalinsulfonat-Formaldehyd-Kondensaten, insbesondere ß-Naphthalinsulfonat-Formaldehyd-Kondensaten, und Ligninsulfonaten.

16. Additiv nach einer der vorhergehenden Ausführungsformen, wobei das sulfonierte polymere Dispergiermittel ein sulfoniertes Keton-Formaldehyd-Kondensat, insbesondere ein sulfoniertes Aceton-Formaldehyd-Kondensat, ein sulfoniertes Cyclohexanon-Formaldehyd-Kondensat oder ein Ligninsulfonat ist.

17. Additiv nach einer der vorhergehenden Ausführungsformen, zusätzlich umfassend wenigstens ein Neutralisierungsmittel.

18. Additiv nach Ausführungsform 17, wobei das Neutralisierungsmittel ein organisches aliphatisches Monoamin, aliphatisches Polyamin, Alkalimetallhydroxid, insbesondere Natrium- oder Kaliumhydroxid, oder Ammoniak ist.

19. Additiv nach Ausführungsform 18, wobei das Neutralisierungsmittel ausgewählt ist unter Ammoniak, Monohydroxy-$C_1$-$C_4$-alkylaminen, Di-hydroxy-$C_1$-$C_4$-alkylaminen, Tri-hydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetra-hydroxy-$C_1$-$C_4$-alkyl)- $C_1$-$C_4$-alkylendiaminen, Polyethyleniminen, Polypropyleniminen und Gemischen davon.

20. Additiv nach Ausführungsform 19, wobei das Neutralisierungsmittel ausgewählt ist unter Ammoniak, Monohydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alkylendiaminen, und Polyethyleniminen.

21. Additiv nach Ausführungsform 20, wobei das Neutralisierungsmittel ausgewählt ist unter Ammoniak, Ethylendiamin, Monoethanolamin, Diethanolamin, Triethanolamin und Polyethyleniminen.

22. Additiv nach einer der vorhergehenden Ausführungsformen, das einen pH-Wert von 2 bis 13, vorzugsweise 6 bis 12 und insbesondere 9 bis 11,5 aufweist.

23. Additiv nach einer der vorhergehenden Ausführungsformen, wobei das Additiv zusätzlich mindestens ein polymeres Dispergiermittel (Kammpolymer) enthält, das anionische und/oder anionogene Gruppen und Polyetherseitenketten umfasst.

24. Additiv nach Ausführungsform 23, wobei das Kammpolymer als anionische oder anionogene Gruppe zumindest eine Struktureinheit der allgemeinen Formeln (Ia), (Ib), (Ic) und/oder (Id) aufweist:

(Ia)

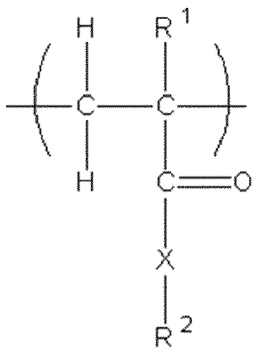

worin

$R^1$ für H oder eine unverzweigte oder verzweigte $C_1$-$C_4$-Alkylgruppe, $CH_2COOH$ oder $CH_2CO$-X-$R^2$, vorzugsweise für H oder $CH_3$, steht;
X für NH-($C_nH_{2n}$), O($C_nH_{2n}$) mit n = 1, 2, 3 oder 4, wobei das Stickstoffatom bzw. das Sauerstoffatom an die CO-Gruppe gebunden ist, oder für eine chemische Bindung, vorzugsweise für X = chemische Bindung oder O($C_nH_{2n}$), steht;

$R^2$ für OM, $PO_3M_2$, oder $O\text{-}PO_3M_2$ steht; mit der Maßgabe, dass X für eine chemische Bindung steht, wenn $R^2$ für OM steht;

(Ib)

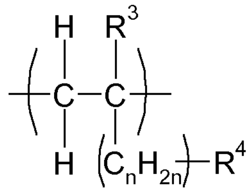

worin

$R^3$ für H oder eine unverzweigte oder verzweigte $C_1$-$C_4$-Alkylgruppe, vorzugsweise für H oder $CH_3$, steht;

n für 0, 1, 2, 3 oder 4, vorzugsweise für 0 oder 1, steht;

$R^4$ für $PO_3M_2$, oder $O\text{-}PO_3M_2$ steht;

(Ic)

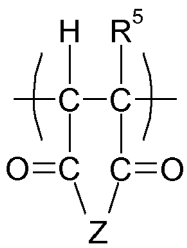

worin

$R^5$ für H oder eine unverzweigte oder verzweigte $C_1$-$C_4$-Alkylgruppe, vorzugsweise für H, steht;

Z für O oder oder $NR^7$, vorzugsweise für O, steht;

$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht, und

n für 1, 2, 3 oder 4, vorzugsweise für 1, 2 oder 3, steht;

(Id)

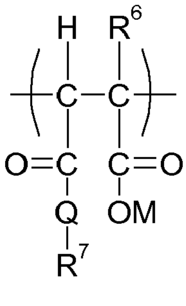

worin

$R^6$ für H oder eine unverzweigte oder verzweigte $C_1$-$C_4$-Alkylgruppe, vorzugsweise für H, steht;

Q für $NR^7$ oder O, vorzugsweise für O, steht;

$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht,

n für 1, 2, 3 oder 4, vorzugsweise für 1, 2 oder 3, steht; und

jedes M unabhängig voneinander für H oder ein Kationäquivalent steht.

25. Additiv nach Ausführungsform 24, wobei das Kammpolymer als anionische oder anionogene Gruppe mindestens eine Struktureinheit der Formel (Ia) aufweist, worin $R^1$ für H oder $CH_3$ steht; und/oder mindestens eine Struktureinheit der Formel (Ib), worin $R^3$ für H oder $CH_3$ steht; und/oder mindestens eine Struktureinheit der Formel (Ic), worin $R^5$ für H oder $CH_3$ steht und Z für O steht; und/oder mindestens eine Struktureinheit der Formel (Id), worin $R^6$ für H steht und Q für O steht.

26. Additiv nach Ausführungsform 24, wobei das Kammpolymer als anionische oder anionogene Gruppe mindestens eine Struktureinheit der Formel (Ia) aufweist, worin $R^1$ für H oder $CH_3$ steht und $XR^2$ für OM oder X für $O(C_nH_{2n})$ mit n = 1, 2, 3 oder 4, insbesondere 2, steht und $R^2$ für $O\text{-}PO_3M_2$ steht.

27. Additiv nach einer der Ausführungsformen 23 bis 26, wobei das Kammpolymer als Polyetherseitenkette zumindest eine Struktureinheit der allgemeinen Formeln (IIa), (IIb), (IIc) und/oder (IId) aufweist:

(IIa)

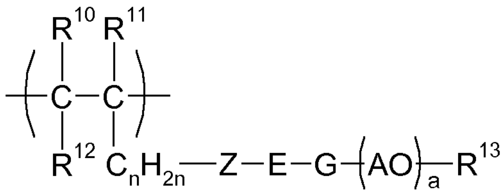

worin

| | |
|---|---|
| $R^{10}$, $R^{11}$ und $R^{12}$ | unabhängig voneinander für H oder eine unverzweigte oder verzweigte $C_1$-$C_4$-Alkylgruppe stehen; |
| Z | für O oder S steht; |
| E | für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht; |
| G | für O, NH oder CO-NH steht; oder |
| E und G | gemeinsam für eine chemische Bindung stehen; |
| A | für $C_xH_{2x}$ mit x = 2, 3, 4 oder 5 oder $CH_2CH(C_6H_5)$, vorzugsweise für 2 oder 3, steht; |
| n | für 0, 1, 2, 3, 4 oder 5, vorzugsweise für 0, 1 oder 2, steht; |
| a | für eine ganze Zahl von 2 bis 350, vorzugsweise 5 bis 150, steht; |
| $R^{13}$ | für H, eine unverzweigte oder verzweigte $C_1$-$C_4$-Alkylgruppe, CO-$NH_2$ und/oder $COCH_3$ steht; |

(IIb)

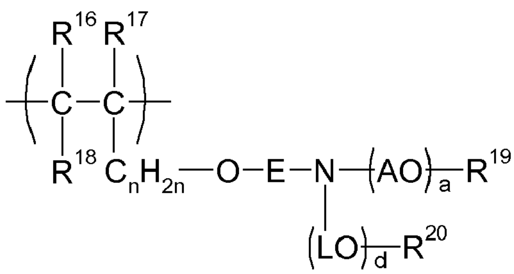

worin

| | |
|---|---|
| $R^{16}$, $R^{17}$ und $R^{18}$ | unabhängig voneinander für H oder eine unverzweigte oder verzweigte $C_1$-$C_4$-Alkylgruppe stehen; |
| E | für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht; |

| | |
|---|---|
| A | für $C_xH_{2x}$ mit x = 2, 3, 4 oder 5oder $CH_2CH(C_6H_5)$, vorzugsweise für 2 oder 3, steht; |
| n | für 0, 1, 2, 3, 4 und/oder 5, vorzugsweise für 0, 1 oder 2, steht; |
| L | für $C_xH_{2x}$ mit x = 2, 3, 4 oder 5oder $CH_2$-$CH(C_6H_5)$, vorzugsweise für 2 oder 3, steht; |
| a | für eine ganze Zahl von 2 bis 350, vorzugsweise 5 bis 150, steht; |
| d | für eine ganze Zahl von 1 bis 350, vorzugsweise 5 bis 150, steht; |
| $R^{19}$ | für H oder eine unverzweigte oder verzweigte $C_1$-$C_4$-Alkylgruppe steht; |
| $R^{20}$ | für H oder eine unverzweigte $C_1$-$C_4$-Alkylgruppe steht; |

(IIc)

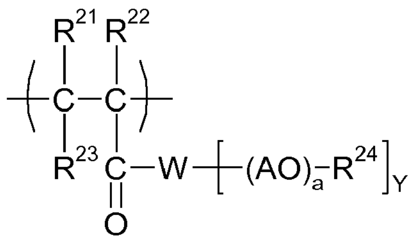

worin

| | |
|---|---|
| $R^{21}$, $R^{22}$ und $R^{23}$ | unabhängig voneinander für H oder eine unverzweigte oder verzweigte $C_1$-$C_4$-Alkylgruppe stehen; |
| W | für O, $NR^{25}$ oder N steht |
| Y | für 1 steht, wenn W = O oder $NR^{25}$, und für 2 steht, wenn W = N; |
| A | für $C_xH_{2x}$ mit x = 2, 3, 4 oder 5oder $CH_2CH(C_6H_5)$, vorzugsweise für 2 oder 3, steht; |
| a | für eine ganze Zahl von 2 bis 350, vorzugsweise 5 bis 150, steht; |
| $R^{24}$ | für H oder eine unverzweigte oder verzweigte $C_1$-$C_4$-Alkylgruppe steht; und |
| $R^{25}$ | für H oder eine unverzweigte oder verzweigte $C_1$-$C_4$-Alkylgruppe steht; |

(IId)

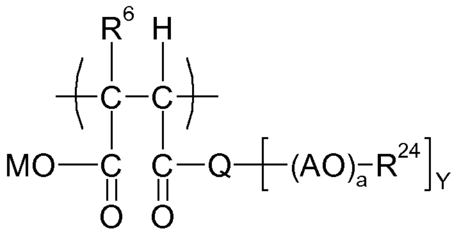

worin

| | |
|---|---|
| $R^6$ | für H oder eine unverzweigte oder verzweigte $C_1$-$C_4$-Alkylgruppe steht; |
| Q | für $NR^{10}$, N oder O steht; |
| V | für 1 steht, wenn W = O oder $NR^{10}$ und für 2 steht, wenn W = N; |
| $R^{10}$ | für H oder eine unverzweigte oder verzweigte $C_1$-$C_4$-Alkylgruppe steht; und |
| A | für $C_xH_{2x}$ mit x = 2, 3, 4 oder 5, oder $CH_2C(C_6H_5)H$, vorzugsweise für 2 oder 3, steht; |
| $R^{24}$ | für H oder eine unverzweigte oder verzweigte $C_1$-$C_4$-Alkylgruppe steht; |
| M | für H oder ein Kationäquivalent steht; und |
| a | für eine ganze Zahl von 2 bis 350, vorzugsweise 5 bis 150, steht. |

28. Additiv nach Ausführungsform 27, wobei das Kammpolymer als Polyetherseitenkette aufweist:

(a) mindestens eine Struktureinheit der Formel (IIa), worin $R^{10}$ und $R^{12}$ für H stehen, $R^{11}$ für H oder $CH_3$ steht, E und G gemeinsam für eine chemische Bindung stehen, A für $C_xH_{2x}$ mit x = 2 und/oder 3, a für 3 bis 150 steht, und $R^{13}$ für H oder eine unverzweigte oder verzweigte $C_1$-$C_4$-Alkylgruppe steht; und/oder

(b) mindestens eine Struktureinheit der Formel (IIb), worin $R^{16}$ und $R^{18}$ für H stehen, $R^{17}$ für H oder $CH_3$ steht, E für eine unverzweigte oder verzweigte $C_1$-$C_6$-Alkylengruppe steht, A für $C_xH_{2x}$ mit x = 2 und/oder 3 steht, L für $C_xH_{2x}$ mit x = 2 und/oder 3 steht, a für eine ganze Zahl von 2 bis 150 steht, d für eine ganze Zahl von 1 bis 150 steht, $R^{19}$ für H oder eine unverzweigte oder verzweigte $C_1$-$C_4$-Alkylgruppe steht, und $R^{20}$ für H oder eine unverzweigte oder verzweigte $C_1$-$C_4$-Alkylgruppe steht; und/oder

(c) mindestens eine Struktureinheit der Formel (IIc), worin $R^{21}$ und $R^{23}$ für H stehen, $R^{22}$ für H oder $CH_3$ steht, A für $C_xH_{2x}$ mit x = 2 und/oder 3 steht, a für eine ganze Zahl von 2 bis 150 steht, und $R^{24}$ für H oder eine unverzweigte oder verzweigte $C_1$-$C_4$-Alkylgruppe steht; und/oder

(d) mindestens eine Struktureinheit der Formel (IId), worin $R^6$ für H steht, Q für O steht, $R^7$ für $(C_nH_{2n})$-O-$(AO)_a$-$R^9$ steht, n für 2 und/oder 3 steht, A für $C_xH_{2x}$ mit x = 2 und/oder 3, a für eine ganze Zahl von 1 bis 150 steht und $R^9$ für H oder eine unverzweigte oder verzweigte $C_1$-$C_4$-Alkylgruppe steht.

29. Additiv nach einer der Ausführungsformen 27 oder 28, wobei das Kammpolymer mindestens eine Struktureinheit der Formel (IIa) und/oder (IIc) umfasst.

30. Additiv nach Ausführungsform 23, wobei das Kammpolymer ein Polykondensationsprodukt ist, das Struktureinheiten (III) und (IV) umfasst:

(III)

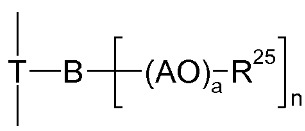

worin

- T für einen substituierten oder unsubstituierten Phenylrest, substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
- n für 1 oder 2 steht;
- B für N, NH oder O steht, mit der Maßgabe, dass n für 2 steht, wenn B für N steht und der Maßgabe, dass n für 1 steht, wenn B für NH oder O steht;
- A für $C_xH_{2x}$ mit x = 2, 3, 4 oder 5 oder $CH_2CH(C_6H_5)$ steht;
- a für eine ganze Zahl von 1 bis 300, vorzugsweise 5 bis 150, steht;
- $R^{25}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;

wobei die Struktureinheit (IV) ausgewählt ist unter den Struktureinheiten (IVa) und (IVb)

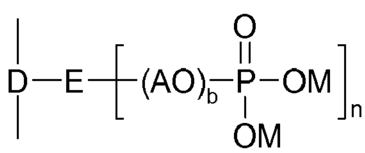

(IVa)

worin

- D für einen substituierten oder unsubstituierten Phenylrest, substituierten oder unsubstituierten Naphthylrest oder für einen substituierten oder unsubstituierten heteroaromatischen Rest mit 5 bis 10 Ringatomen, wovon 1 oder 2 Atome Heteroatome sind, die ausgewählt sind unter N, O und S, steht;
- E für N, NH oder O steht, mit der Maßgabe, dass m für 2 steht, wenn E für N steht und der Maßgabe, dass m

für 1 steht, wenn E für NH oder O steht;

A für $C_xH_{2x}$ mit x = 2, 3, 4 oder 5 oder $CH_2CH(C_6H_5)$ steht;

b für eine ganze Zahl von 1 bis 300, vorzugsweise 1 bis 50, steht;

M unabhängig voneinander für H, ein Kationäquivalent steht; und

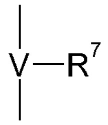

(IVb)

worin

V für einen substituierten oder unsubstituierten Phenylrestoder substituierten oder unsubstituierten Naphthylrest steht, wobei V gegebenenfalls durch 1 oder zwei Reste substituiert ist, die unabhängig voneinander ausgewählt sind unter $R^8$, OH, $OR^8$, $(CO)R^8$, COOM, $COOR^8$, $SO_3R^8$ und $NO_2$, vorzugsweise OH, ; $OC_1$-$C_4$-Alkyl und $C_1$-$C_4$-Alkyl;

$R^7$ für COOM, $OCH_2COOM$, $SO_3M$ oder $OPO_3M_2$ steht;

M für H oder ein Kationäquivalent steht; wobei die erwähnten Phenyl-, Naphthyl- oder heteroaromatischen Reste gegebenenfalls durch 1 oder zwei Reste substituiert sind, die ausgewählt sind unter $R^8$, OH, $OR^8$, $(CO)R^8$, COOM, $COOR^8$, $SO_3R^8$ und $NO_2$; und $R^8$ für $C_1$-$C_4$-Alkyl, Phenyl, Naphthyl, Phenyl-$C_1$-$C_4$-alkyl oder $C_1$-$C_4$-Alkylphenyl steht.

31. Additiv nach Ausführungsform 30, wobei in Formel III T für einen substituierten oder unsubstituierten Phenylrest oder Naphthylrest steht, A für $C_xH_{2x}$ mit x = 2 und/oder 3 steht, a für eine ganze Zahl von 1 bis 150 steht, und $R^{25}$ für H, oder einen verzweigten oder unverzweigten $C_1$- bis $C_{10}$-Alkylrest steht.

32. Additiv nach Ausführungsform 30, wobei in Formel IVa D für einen substituierten oder unsubstituierten Phenylrest oder Naphthylrest steht, E für NH oder O steht, A für $C_xH_{2x}$ mit x = 2 und/oder 3 steht, und b für eine ganze Zahl von 1 bis 150 steht.

33. Additiv nach einer der Ausführungsformen 29 bis 31, wobei T und/oder D für Phenyl oder Naphthyl, das durch 1 oder 2 $C_1$-$C_4$-Alkyl-, Hydroxy- oder 2 $C_1$-$C_4$-Alkoxygruppen substituiert ist, stehen.

34. Additiv nach Ausführungsform 30, wobei V für Phenyl oder Naphthyl, das durch 1 oder 2 $C_1$-$C_4$-Alkyl, OH, $OCH_3$ oder COOM substituiert ist, und $R^7$ für COOM oder $OCH_2COOM$ steht.

35. Additiv nach einer der Ausführungsformen 30 bis 33, wobei das Polykondensationsprodukt eine weitere Struktureinheit (V) der Formel

(V)

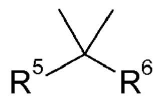

umfasst,

worin

$R^5$ und $R^6$ gleich oder verschieden sein können und für H, $CH_3$, COOH oder eine substituierte oder unsubstituierte Phenyl- oder Naphthylgruppe oder für eine substituierte oder unsubstituierte heteroaromatische Gruppe mit 5 bis 10 Ringatomen, wovon 1 oder 2 Atome Heteroatome sind, die ausgewählt sind unter N, O und S.

36. Additiv nach Ausführungsform 35, worin $R^5$ und $R^6$ gleich oder verschieden sein können und für H, $CH_3$, oder COOH, insbesondere für H oder einer der Reste $R^5$ und $R^6$ für H und der andere für $CH_3$, stehen.

37. Additiv nach einer der Ausführungsformen 24 bis 29, wobei das Kammpolymer Einheiten der Formeln (I) und (II), insbesondere der Formeln (Ia) und (IIa) aufweist.

38. Additiv nach einer der Ausführungsformen 24 bis 29, wobei das Kammpolymer Struktureinheiten der Formeln (Ia) und (IIc) aufweist.

39. Additiv nach einer der Ausführungsformen 24 bis 29, wobei das Kammpolymer Struktureinheiten der Formeln (Ic) und (IIa) aufweist.

40. Additiv nach einer der Ausführungsformen 24 bis 29, wobei das Kammpolymer Struktureinheiten der Formeln (Ia), (Ic) und (IIa) aufweist.

41. Additiv nach einer der Ausführungsformen 24 bis 29, wobei das Kammpolymer aufgebaut ist aus (i) anionischen oder anionogenen Struktureinheiten, die abgeleitet sind von Acrylsäure, Methacrylsäure, Maleinsäure, Hydroxyethylacrylatphosphorsäureester, und/oder Hydroxyethylmethacrylatphosphorsäureester, Hydroxyethylacrylat-Phosphorsäurediester , und/oder Hydroxyethylmethacrylat-Phosphorsäurediester und (ii) Polyetherseitenkettenstruktureinheiten, die abgeleitet sind von $C_1$-$C_4$-Alkyl-polyethylenglykolacrylsäureester, Polyethylenglykolacrylsäureester,$C_1$-$C_4$-Alkyl-polyethylenglykolmethacrylsäureester, Polyethylenglykolmethacrylsäureester, $C_1$-$C_4$-Alkyl-polyethylenglykolacrylsäureester, Polyethylenglykolacrylsäureester, Vinyloxy-$C_2$-$C_4$-alkylen-polyethylenglykol, Vinyloxy-$C_2$-$C_4$-alkylen-polyethylenglykol-$C_1$-$C_4$-alkylether, Allyloxy-polyethylenglykol, Allyloxy- polyethylenglykol-$C_1$-$C_4$-alkylether, Methallyloxy- polyethylen-glykol, Methallyloxy- polyethylenglykol-$C_1$-$C_4$-alkylether, Isoprenyloxy-polyethylenglykol und/oder Isoprenyloxy- polyethylenglykol -$C_1$-$C_4$-alkylether

42. Additiv nach Ausführungsformen 41, wobei das Kammpolymer aufgebaut ist aus Struktureinheiten (i) und (ii), die abgeleitet sind von

(i) Hydroxyethylacrylatphosphorsäureester und/oder Hydroxyethylmethacrylatphosphorsäureester und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure und/oder Methacrylsäure und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure Methacrylsäure und/oder Maleinsäure und (ii) Vinyloxy-$C_2$-$C_4$-alkylenpolyethylenglykol, Allyloxy-polyethylenglykol, Methallyloxy- polyethylen-glykol und/oder Isoprenyloxy- polyethylenglykol.

43. Additiv nach Ausführungsform 41, wobei das Kammpolymer aufgebaut ist aus Struktureinheiten (i) und (ii), die abgeleitet sind von

(i) Hydroxyethylmethacrylatphosphorsäureester und (ii) $C_1$-$C_4$-Alkyl-polyethylenglykolmethacrylsäureester oder Polyethylenglykolmethacrylsäureester; oder

(i) Methacrylsäure und (ii) $C_1$-$C_4$-Alkyl-polyethylenglykolmethacrylsäureester oder Polyethylenglykolmethacrylsäureester ; oder

(i) Acrylsäure und Maleinsäure und (ii) Vinyloxy-$C_2$-$C_4$-alkylen-polyethylenglykol oder

(i) Acrylsäure und Maleinsäure und (ii) Isoprenyloxy-polyethylenglykol oder

(i) Acrylsäure und (ii) Vinyloxy-$C_2$-$C_4$-alkylen-polyethylenglykol oder

(i) Acrylsäure und (ii) Isoprenyloxy-polyethylenglykol oder

(i) Acrylsäure und (ii) Methallyloxy-polyethylenglykol oder

(i) Maleinsäure und (ii) Isoprenyloxy-polyethylenglykol oder

(i) Maleinsäure und (ii) Allyloxy-polyethylenglykol oder

(i) Maleinsäure und (ii) Methallyloxy-polyethylenglykol

44. Additiv nach einer der Ausführungsformen 24 bis 29, wobei das Molverhältnis der Struktureinheiten (I) : (II) 1:4 bis 15:1, insbesondere 1:1 bis 10:1, beträgt.

45. Additiv nach einer der vorhergehenden Ausführungsformen, wobei das Molgewicht der Polyetherseitenketten >500 g/mol, bevorzugt >3000 g/mol ist und <8000 g/mol, vorzugsweise <6000g/mol ist.

46. Additiv nach Ausführungsform 45, wobei das Molgewicht der Polyetherseitenketten im Bereich von 2000-8000 g/mol, insbesondere 4000-6000 g/mol, liegt.

47. Additiv nach einer der Ausführungsformen 30 bis 36, wobei das Molverhältnis der Struktureinheiten (III) : (IV) 4:1 bis 1:15, insbesondere 2:1 bis 1:10, beträgt.

48. Additiv nach einer der Ausführungsformen 30 bis 36, wobei das Molverhältnis der Struktureinheiten (III + IV): (V) 2:1 bis 1:3, insbesondere 1:0,8 bis 1:2, beträgt.

49. Additiv nach einer der vorhergehenden Ausführungsformen, wobei die Ladungsdichte des polymeren sulfonierten Dispergiermittels im Bereich von 1 mmol/g - 10 mmol/g, bevorzugt 2 mmol/g - 5 mmol/g liegt.

50. Additiv nach einer der vorhergehenden Ausführungsformen, wobei das Molgewicht des polymeren sulfonierten Dispergiermittels im Bereich von 1000 g/mol bis 80.000 g/mol, bevorzugt 5.000 g/mol bis 70.000 g/mol liegt.

51. Additiv nach einer der Ausführungsformen 30 bis 36 oder 47 bis 48, wobei das Kammpolymer aufgebaut ist aus Struktureinheiten der Formeln (III) und (IV), worin T und D für Phenyl oder Naphthyl steht, wobei das Phenyl oder Naphthyl die gegebenenfalls durch 1 oder 2 $C_1$-$C_4$-Alkyl-, Hydroxy- oder 2 $C_1$-$C_4$-Alkoxygruppen substituiert ist, B und E für O stehen, A für $C_xH_{2x}$ mit x = 2 steht, a für 3 bis 150, insbesondere 10 bis 150, steht, und b für 1, 2 oder 3 steht.

52. Additiv nach einer der vorhergehenden Ausführungsformen, umfassend ein sulfoniertes Aceton-Formaldehyd-Kondensat oder Cyclohexanon-Formaldehyd-Kondensat als polymeres sulfoniertes Dispergiermittel, $Ca^{2+}$ als Metallkation und Aluminat als Anion.

53. Additiv nach einer der vorhergehenden Ausführungsformen, dadurch erhältlich, dass man das Salz des Metallkations in Gegenwart des polymeren sulfonierten Dispergiermittels fällt, um eine kolloid-disperse Zubereitung des Salzes zu erhalten.

54. Additiv nach einer der vorhergehenden Ausführungsformen, dadurch erhältlich, dass man ein frisch gefälltes Salz des mehrwertigen Metallkations in Gegenwart des polymeren sulfonierten Dispergiermittels dispergiert, um eine kolloid-disperse Zubereitung des Salzes zu erhalten.

55. Additiv nach Ausführungsform 53 oder 54, wobei man die kolloid-disperse Zubereitung mit einem Neutralisierungsmittel versetzt.

56. Additiv nach einer der Ausführungsformen 1 bis 55, dadurch erhältlich, dass man ein Hydroxid und/oder Oxid des mehrwertigen Metallkations mit einer Säure peptisiert, um eine kolloid-disperse Zubereitung des Salzes des mehrwertigen Metallkations zu erhalten.

57. Additiv nach Ausführungsform 55, wobei die Säure ausgewählt ist unter Borsäure, Kohlensäure, Oxalsäure, Kieselsäure, Schwefelsäure, Polyphosphorsäure, Phosphorsäure, Phosphoriger Säure, einem Hexaquokomplex von $Al^{3+}$ und/oder einem Hexaquokomplex von $Fe^{3+}$.

58. Additiv nach Ausführungsform 1, wobei das Additiv keine Zubereitung enthält, bei der das Metallkation $Ca^{2+}$, das Anion Aluminat und das polymere sulfonierte Dispergiermittel ein ß-Naphthalinsulfonat-Formaldehyd-Kondensat ist.

59. Baustoffmischung, umfassend ein Additiv nach einer der Ausführungsformen 1 bis 58 und ein Bindemittel, ausgewählt unter (Portland)zement, Hüttensand, Flugasche, Silikastaub, Metakaolin, natürlichen Puzzolanen, gebranntem Ölschiefer, Calcium-Aluminat-Zement und Bindemitteln auf Basis von Calciumsulfat wie $\alpha$-Halbhydrat, $\alpha$/$\beta$-Halbhydrat, $\beta$-Halbhydrat, natürliches Anhydrit, synthetisches Anhydrit, aus der Rauchgasentschwefelung erhaltenes Anhydritund/oder und Gemischen davon.

60. Baustoffmischung nach Ausführungsform 59, welche als hydraulisches Bindemittel (Portland)zement oder ein Bindemittel auf Basis von Calciumsulfat umfasst.

61. Baustoffmischung nach Ausführungsform 60, welche im wesentlichen keinen (0 bis 5 Gew.- %) Portlandzement umfasst.

M steht in den obigen Ausführungsformen genannten Formeln vorzugsweise jeweils für ein Alkalimetallion, insbesondere das Natriumion, 1/2 Erdalkalimetallion (d.h. ein Äquivalent), insbesondere ½ Calciumion, das Ammoniumion, oder ein organisches Ammoniumion, wie ein $C_1$-$C_4$-Alkylamin oder ein Mono-hydroxy-$C_1$-$C_4$-alkylamin.

Gemäß einer Ausführungsform liegt das Metallkation in einer Menge entsprechend der folgenden Formel (a) vor:

$$1 < \frac{\sum_i z_{K,i} * n_{K,i}}{\sum_j z_{S,j} * n_{S,j}} < 30$$

wobei

$Z_{K,i}$ für den Betrag der Ladungszahl des Metallkations steht,
$n_{K,i}$ für die Molzahl des eingewogenen Metallkations steht,
$z_{S,j}$ für den Betrag der Ladungszahl der im polymeren Dispergiermittel enthaltenen anionischen und anionogenen Gruppen,
$n_{S,j}$ für die Molzahl der im eingewogenen polymeren Dispergiermittel enthaltenen anionischen und anionogenen Gruppen steht,

die Indices i und j voneinander unabhängig und eine ganze Zahl größer als 0 sind, i für die Anzahl verschiedenartiger Metallkationen steht und j für die Anzahl der im polymeren Dispergiermittel enthaltenen Sulfonsäure und/oder Sulfonatgruppen steht, wobei z so definiert ist, dass die Ladungszahl für Kationen sich stets auf die volle formale Ladung bezieht, d.h. $z_{Fe}(FeCl_3)=3$, $z_{Fe}(FeCl_2)=2$. Weiterhin steht z für den Betrag der formalen Ladung der Anionen bei maximaler Deprotonierung, d.h. $z_{PO4}(H_3PO_4)=z_{PO4}(Na_3PO_4)=3$, oder $z_{CO3}(Na_2CO_3)=2$. Im Fall von Aluminat wird gesetzt $z_{AlO2}(NaAlO_2)=z_{AlO2}(NaAl(OH)_4)=1$, im Fall von Silikat wird für alle Silikatspezies gesetzt $z_{SiO3}(Na_2SiO_3)=2$.

Die Summe über die Molzahl $n_{S,j}$ in mmol/g des polymeren sulfonierten Dispergiermittels und gegebenenfalls des Kammpolymers kann nach verschiedenen bekannten Verfahren bestimmt werden, beispielsweise durch die Bestimmung durch Ladungsdichtetitration mit einem Polykation wie z.B. beschrieben in J. Plank et al., Cem. Conr. Res. 2009, 39, 1-5. Weiterhin ist der mit dem Stand der Technik vertraute Fachmann in der Lage, diesen Wert aus den Monomereinwaagen für die Synthese des polymeren sulfonierten Dispergiermittels und/oder des Kammpolymers in einfacher Rechnung zu bestimmen.

Das Metallkation ist ausgewählt ist unter $Ca^{2+}$, $Al^{3+}$, $Fe^{3+}$, $Fe^{2+}$, $Zn^{2+}$, $Mn^{2+}$, $Cu^{2+}$, $Mg^{2+}$, $Sr^{2+}$, $Ba^{2+}$, $Li^{+}$ und Gemischen davon, bevorzugt ausgewählt unter $Ca^{2+}$, $Al^{3+}$, $Mg^{2+}$, $Fe^{3+}$, $Fe^{2+}$, $Mn^{2+}$, $Zn^{2+}$ und Gemischen davon, besonders bevorzugt ausgewählt unter $Ca^{2+}$, $Al^{3+}$, $Mg^{2+}$, $Fe^{3+}$, $Fe^{2+}$ und Gemischen davon und ist insbesondere $Ca^{2+}$.

Bevorzugt ist das Gegenanion des eingesetzten Metallkationsalzes so gewählt, dass die Salze gut wasserlöslich sind, bevorzugt ist die Löslichkeit bei Standardbedingungen von 20 °C und Normaldruck größer als 10 g/l, besonders bevorzugt größer als 100 g/l und insbesondere bevorzugt größer als 200 g/l. Der Zahlenwert der Löslichkeit bezieht sich dabei auf das Lösungsgleichgewicht ($MX = M^{n+} + X^{n-}$, wobei $M^{n+}$: Metallkation; $X^{n-}$: Anion) des Reinstoffs des Salzes in deionisiertem Wasser bei 20°C und Normaldruck und berücksichtigt nicht die Effekte durch Protonierungsgleichgewichte (pH-Wert) und Komplexierungs-gleichgewichte.

Bevorzugt sind die Anionen Sulfat, oder ein einfach geladenes Gegenanion, bevorzugt ein Nitrat, Acetat, Formiat, Hydrogensulfat, Halogenid, Halogenat, Pseudohalogenid, Methansulfonat und/oder Amidosulfonat. Besonders bevorzugt ist aus der Reihe der Halogenide Chlorid. Zu den Pseudohalogeniden zählen Cyanid, Azid, Cyanat, Thiocyanat, Fulminat. Auch Doppelsalze können als Metallsalz eingesetzt werden. Doppelsalze sind Salze, welche mehrere verschiedene Kationen aufweisen. Beispielhaft genannt sei der Alaun ($KAl(SO_4)_2 \cdot 12H_2O$), welcher als Aluminiumsalz geeignet ist. Die Metallkationsalze mit den vorstehend genannten Gegenanionen sind gut wasserlöslich und damit besonders gut geeignet, da höhere Konzentrationen der wässrigen Metallsalzlösungen (als Edukt) eingestellt werden können.

Als Betrag der Ladungszahl der im polymeren sulfonierten Dispergiermittel enthaltenen anionischen und anionogenen Gruppen, wie Sulfonsäure und/oder Sulfonatgruppen und gegebenenfalls Carboxyl- oder Carboxylatgruppen, ist diejenige Ladungszahl bezeichnet, die bei vollständiger Deprotonierung der anionogenen Gruppe ($SO_3H$ bzw. COOH-Gruppe) vorliegt. Anionische Gruppen sind die im polymeren Dispergiermittel enthaltenen deprotonierten Säuregruppen. Anionogene Gruppen sind die im polymeren Dispergiermittel enthaltenen Säuregruppen. Gruppen, die zugleich anionisch und anionogen sind, wie teilweise deprotonierte mehrbasige Säurereste, werden bei der Bildung der Summe der Stoffmengen der im polymeren Dispergiermittel enthaltenen anionischen und anionogenen Gruppen ausschließlich den anionischen Gruppen zugerechnet.

Als verschiedenartig werden anionische und anionogene Gruppen des polymeren Dispergiermittels bezeichnet, die sich durch Protonierung nicht ineinander überführen lassen.

Als verschiedenartige mehrwertige Metallkationen werden mehrwertige Metallkationen unterschiedlicher Elemente bezeichnet. Darüber hinaus werden als verschiedenartige mehrwertige Metallkationen auch Metallkationen desselben Elements mit unterschiedlicher Ladungszahl bezeichnet.

Das Verhältnis nach Formel (a) liegt bevorzugt im Bereich von 0.5 bis 30 oder 1 bis 10. Besonders bevorzugt liegt das Verhältnis im Bereich von 1 bis 8 oder 1,1 bis 8 oder 1 bis 6 oder 1,1 bis 6 oder 1,2 bis 6 und insbesondere im Bereich von 1 bis 5 oder 1,1 bis 5 oder 1,2 bis 5 oder 1,25 bis 5.

Das Additiv für hydraulisch abbindende Massen umfasst wenigstens ein Anion, das mit dem mehrwertigen Metallkation ein schwerlösliches Salz zu bilden vermag, wobei mit schwerlöslichem Salz ein Salz bezeichnet ist, dessen Löslichkeit in Wasser bei pH 9 und Standardbedingungen von 20 °C und Normaldruck vorzugsweise kleiner als 5 g/l ist, besonders bevorzugt kleiner als 1 g/l ist.

Gemäß einer Ausführungsform ist das Anion ausgewählt unter Aluminat, Ferrat, Carbonat, Oxalat, Silikat, Phosphat, Polyphosphat, Phosphit, Borat und Sulfat. Bevorzugt ist das Anion ausgewählt unter Aluminat, Ferrat, Carbonat, Silikat und Phosphat, besonders bevorzugt ist das Anion Aluminat. Bei der Anionenquelle kann es sich um eine wasserlösliche Säure oder ein wasserlösliches Salz handeln, wobei mit wasserlöslicher Säure oder wasserlöslichem Salz eine Löslichkeit in Wasser bei Standardbedingungen von 20 °C und Normaldruck vorzugsweise von mehr als 20 g/l ist, besonders bevorzugt mehr als 100 g/l ist. Der Zahlenwert der Löslichkeit bezieht sich dabei auf das Lösungsgleichgewicht ($KAn = K^{n+} + An^{n-}$, wobei $K^{n+}$: Kation; $An^{n-}$: Anion) des Reinstoffs der Anionverbindung in deionisiertem Wasser bei 20°C und Normaldruck und berücksichtigt nicht die Effekte durch Protonierungsgleichgewichte (pH-Wert) und Komplexierungs-gleichgewichte.

Gemäß einer weiteren Ausführungsform liegt das Anion in einer Menge entsprechend der folgenden Formel (b) vor:

$$0.01 \leq \frac{\sum_l z_{A,l} \cdot n_{A,l}}{\sum_i z_{K,i} \cdot n_{K,i}} < 3$$

wobei

$Z_{K,i}$ für den Betrag der Ladungszahl des mehrwertigen Metallkations steht,
$n_{K,i}$ für die Molzahl des eingewogenen mehrwertigen Metallkations steht,
$z_{A,l}$ für die Ladungszahl des eingewogenen Anions steht, und
$n_{A,l}$ für die Molzahl des eingewogenen Anions steht.

Das Verhältnis nach Formel (b) liegt bevorzugt im Bereich 0,01 bis 2, besonders bevorzugt 0,1 bis 1,5. Dabei kann jeder im Rahmen der vorliegenden Beschreibung und der Ansprüche genannte Bereich für Formel (a) mit jedem Bereich für Formel (b) kombiniert werden.

Zu den genannten Anionen zählen auch die polymeren Bor-, Silikat-, und Oxalatanionen sowie die Polyphosphate. Unter dem Begriff "polymere Anionen" sind Anionen zu verstehen, welche neben Sauerstoffatomen mindestens zwei Atome aus der Reihe Bor, Kohlenstoff, Silicium und Phosphor umfassen. Besonders bevorzugt handelt es sich um Oligomere mit einer Anzahl von Atomen zwischen 2 und 20, insbesondere bevorzugt 2 bis 14 Atomen, am meisten bevorzugt 2 bis 5 Atomen. Die Anzahl der Atome liegt bei den Silikaten besonders bevorzugt im Bereich von 2 bis 14 Siliciumatomen und bei den Polyphosphaten besonders bevorzugt im Bereich von 2 bis 5 Phosphoratomen.

Bevorzugtes Silikat ist $Na_2SiO_3$ und Wasserglas mit einem Modul, definiert als das Verhältnis von $SiO_2$ zu Alkalioxid, im Bereich von 1 / 1 zu 4 / 1, besonders bevorzugt 1 / 1 zu 3/1.

Bei den Silikaten ist es möglich, dass ein Teil der Siliciumatome der Silikate durch Aluminium ersetzt wird. Aus der Klasse der Aluminosilicate sind entsprechende Verbindungen bekannt. Bevorzugt ist der Anteil von Aluminium kleiner als 10 mol % bezogen auf die Summe von Silicium und Aluminium, besonders bevorzugt ist der Aluminiumanteil gleich null.

Es hat sich als vorteilhaft erwiesen, wenn das Anion Phosphat ist und das Verhältnis nach Formel (b) im Bereich von 0,1 bis 1 liegt.

Es hat sich weiter als vorteilhaft erwiesen, wenn das Anion Aluminat oder Carbonat ist und das Verhältnis nach Formel (b) im Bereich von 0,01 bis 2 liegt.

Es hat sich weiter als vorteilhaft erwiesen, wenn das Anion Silikat ist und das Verhältnis nach Formel (b) im Bereich von 0,01 bis 2 liegt.

Bevorzugt ist das Gegenkation des Anionsalzes, welches mit dem mehrwertigen Metallkation ein schwerlösliches Salz bilden kann, ein einfach geladenes Kation bzw. ein Proton, bevorzugt ein Alkalimetallkation und/oder Ammoniumion. Das Ammoniumion kann auch ein organisches Ammoniumion umfassen, beispielsweise Alkylammoniumionen mit ein bis vier Alkylresten. Der organische Rest kann auch aromatischer Natur sein oder aromatische Reste umfassen. Das Ammoniumion kann auch ein Alkanolammoniumion sein.

Bei den als polymere sulfonierte Dispergiermittel verwendeten sulfonierten Melaminsulfonat-Formaldehyd-Kondensaten handelt es sich um solche, wie sie häufig als Fliessmittel für hydraulische Bindemittel verwendet werden (auch als MFS-Harze bezeichnet). Sulfonierte Melaminsulfonat-Formaldehyd-Kondensate und ihre Herstellung sind beispielsweise beschrieben in CA 2 172 004 A1, DE 44 11 797 A1, US 4,430,469, US 6,555,683 und CH 686 186 sowie in Ullmann's Encyclopedia of Industrial Chemistry, 5th Ed., Vol. A2, Seite 131 und Concrete Admixtures Handbook - Properties, Science and Technology, 2nd Ed., Seiten 411, 412. Bevorzugte sulfonierte Melaminsulfonat Formaldehyd-Kondensate umfassen (stark vereinfachten und idealisierten) Einheiten der Formel

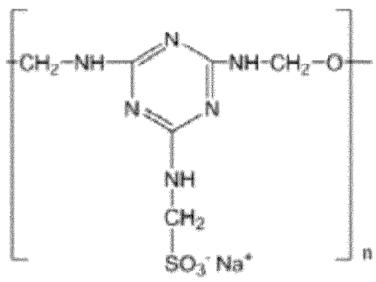

**Melamine formaldehyde sulfite (PMS)**

worin n im allgemeinen für 10 bis 300 steht. Das Molgewicht liegt bevorzugt im Bereich von 2500 bis 80 000. Ein Beispiel für Melaminsulfonat-Formaldehyd-Kondensate sind die unter der Bezeichnung Melment® von der BASF Construction Solutions GmbH vertriebenen Produkte. Zusätzlich zu den sulfonierten Melamineinheiten können weitere Monomere mit einkondensiert sein. Insbesondere Harnstoff eignet sich. Weiterhin können auch weitere aromatische Bausteine wie beispielsweise Gallussäure, Aminobenzolsulfonsäure, Sulfanilsäure, Phenolsulfonsäure, Anilin, Ammoniumbenzoesäure, Dialkoxybenzolsulfonsäure, Dialkoxybenzoesäure, Pyridin, Pyridinmonosulfonsäure, Pyridindisulfonsäure, Pyridincarbonsäure und Pyridindicarbonsäure einkondensiert werden.

Bei den als polymere sulfonierte Dispergiermittel verwendeten Ligninsulfonaten handelt es sich um Produkte, die als Nebenprodukte der Papierindustrie anfallen. Sie sind beschrieben in Ullmann's Encyclopedia of Industrial Chemistry, 5th Ed., Vol. A8, Seiten 586, 587. Sie umfassen Einheiten der stark vereinfachten und idealisierenden Formel

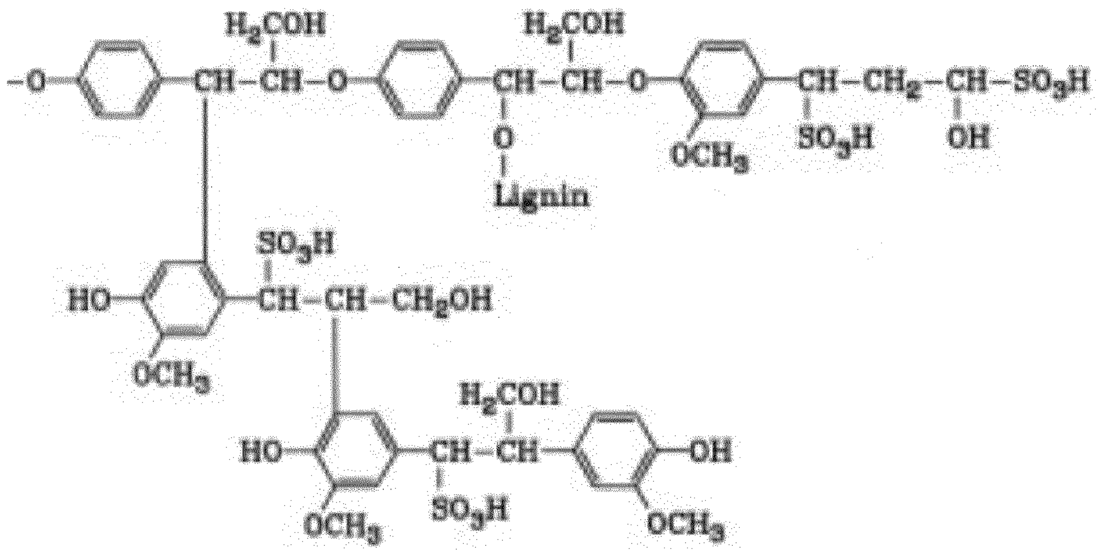

wobei n im allgemeinen für 5 bis 500 steht. Ligninsulfonate haben Molgewichte zwischen 2.000 und 100.000 g/mol. Sie liegen im allgemeinen in Form ihrer Natrium-, Calcium- und/oder Magnesiumsalze vor. Beispiele für geeignete Ligninsulfonate sind die unter der Handelsbezeichnung Borresperse vertriebenen Produkte der norwegischen Firma Borregaard LignoTech.

Bei den als polymere sulfonierte Dispergiermittel verwendeten sulfonierten Keton-Formaldehyd-Kondensaten handelt es sich um Produkte, bei denen als Ketonkomponente ein Mono- oder Diketon, vorzugsweise Aceton, Butanon, Pentanon, Hexanon oder Cyclohexanon eingebaut sind. Derartige Kondensate sind bekannt und beispielsweise beschrieben in der WO 2009/103579. Bevorzugt sind sulfonierte Aceton-Formaldehyd-Kondensate. Sie umfassen im allgemeinen Einheiten der Formel (nach J. Plank et al., J. Appl. Poly. Sci. 2009, 2018 - 2024:

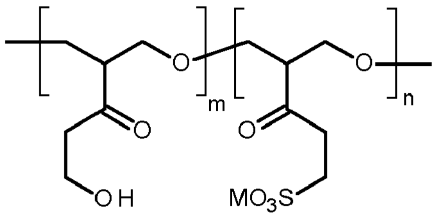

wobei m und n im allgemeinen jeweils für 10 bis 250 stehen, M für ein Alkalimetallion, z.B. $Na^+$, steht und das Verhältnis von m:n im allgemeinen im Bereich von etwa 3:1 bis etwa 1:3, insbesondere etwa 1,2:1 bis 1:1,2, liegt. Beispiele für geeignete Aceton-Formaldehyd-Kondensate sind die unter der Handelsbezeichnung Melcret K1 L vertriebenen Produkte der BASF Construction Solutions GmbH.

Weiterhin können auch weitere aromatische Bausteine wie beispielsweise Gallussäure, Aminobenzolsulfonsäure, Sulfanilsäure, Phenolsulfonsäure, Anilin, Ammoniumbenzoesäure, Dialkoxybenzolsulfonsäure, Dialkoxybenzoesäure, Pyridin, Pyridinmonosulfonsäure, Pyridindisulfonsäure, Pyridincarbonsäure und Pyridindicarbonsäure einkondensiert werden.

Bei den als polymere sulfonierte Dispergiermittel verwendeten sulfonierten Naphthalin-Formaldehyd-Kondensaten handelt es sich um Produkte, welche durch Sulfonierung von Naphthalin und anschließende Polykondensation mit Formaldehyd erhalten werden. Sie werden unter anderem in Concrete Admixtures Handbook - Properties, Science and Technology, 2nd Ed., Seiten 411-413 und Ullmann's Encyclopedia of Industrial Chemistry, 5th Ed., Vol. A8, Seiten 587, 588. beschrieben. Sie umfassen Einheiten der Formel

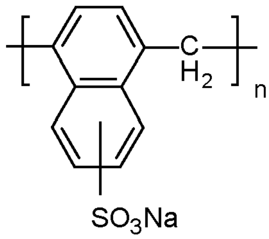

Typischerweise werden Molgewichte (Mw) zwischen 1000 und 50000 g/mol erhalten.

Beispiele für geeignete ß-Naphthalin-Formaldehyd-Kondensate sind die unter der Handelsbezeichnung Melcret 500 L vertriebenen Produkte der BASF Construction Solutions GmbH.

Weiterhin können auch weitere aromatische Bausteine wie beispielsweise Gallussäure, Aminobenzolsulfonsäure, Sulfanilsäure, Phenolsulfonsäure, Anilin, Ammoniumbenzoesäure, Dialkoxybenzolsulfonsäure, Dialkoxybenzoesäure, Pyridin, Pyridinmonosulfonsäure, Pyridindisulfonsäure, Pyridincarbonsäure und Pyridindicarbonsäure einkondensiert werden.

Die durch radikalische Copolymerisation erhältlichen Copolymere sind aufgebaut aus Sulfonsäuremonomeren und copolymerisierbaren Comonomeren. Geeignete sulfonierte Monomere sind: Allylsulfonsäure, Methallylsulfonsäure, 2-Acrylamido-2-methylpropansulfonsäure, Styrolsulfonsäure, Vinylsulfonsäure, Sulfoethylmethacrylat, Acrylsäure(3-sulfopropyl)ester sowie die Metallsalze davon.

Geeignete Comonomere sind:

- Arylalkene und Heteroarylalkene, ggf. substituiert, wie z.B.: Styrol, alpha-Methyl-Styrol, Vinylpyridin, 4-Vinylbenzoesäure, 4-Vinylphthalsäure und deren Salze
- Allyl- und Methallylverbindungen wie z.B.: Allylalkohol, Methallylalkohol, 3-Allyloxy-1,2-Propandiol, 3-Allyloxy-1,2-propandiol, 3-Allyloxy-1,2-propandiol(polyalkoxyl)ether, 3-Methallyloxy-1,2- propandiol, 3-Methallyloxy-1,2-propandiol(polyalkoxyl)ether, Isoprenol, Isoprenolalkylether
- Vinylether wie z.B. 1-Butylvinylether, Isobutylvinylether, Aminopropyvinylether, Ethylenglykolmonovinylether, 4-Hydroxybutylmonovinylether, Vinyletheralkoxylate,

- Vinylester wie z.B. Vinylacetat, Carbamidsäurevinylester
- Vinylische Aldehyde und Ketone wie z.B. Acrolein, Methacrolein, Vinyl-1,3-dioxolan, Crotonaldehyd, 3-Oxo-1-buten
- Acrylsäure und Methacrylsäure, deren Salze und deren Ester wie z.B. 2-Hydroxyethylacrylat, 2-Hydroxethylmethacrylat, 2-Hydroxypropylacrylat, 2-Hydroxypropylmethacrylat, Methylmethacrylat, Ethylmethacrylat, Methylacrylat, (Methyl)-Polyoxyalkylacrylate, (Methyl)Polyoxyalkylmethacrylate, 2,3-Hydroxypropyl(meth)acrylat
- Acrylamide und Methacrylamide, ggf. substituiert, wie Acrylamid, Methacrylamid, N,N-Dimethylacrylamid, N-isopropyl-acrylamid, N-Methacryloyl-glycinamid, Acryloyloxyethyltrimethylammoniumchlorid
- Acrylnitril und Methacrylnitril
- Ungesättigte Polycarbonsäuren und deren Derivate wie z.B.: Maleinsäure, Maleinsäureanhydrid, Maleinsäuremono- und diester wie z.B.: Dimethylmaleat, Monomethylmaleat, Diethylmaleat, Ethylmaleat, Dibutylmaleat, Poly(oxyalkylenmonomethylether)monomaleat, Poly(oxyalkylenmonomethylether)dimaleat, (Phosphonooxyalkylen)monomaleat, (Phosphonooxyalkylen)dimaleat,
- Maleinsäuramide wie z.B. Maleinsäure-Sulfanilsäureamid, Poly(oxyalkylenmonomethylether)maleisäureamid, Poly(oxyalkylen)maleinsäureamid, (Phosphonooxyalkylen)maleinsäuremonoamid, (Phosphonooxyalkylen)maleinsäurediamid,
- Maleinsäuremonoanilid, Maleinsäureimide wie z.B. Maleinimid, N-Ethylmaleinimid, Itaconsäure und Itaconsäureanhydrid, Itaconsäuremono(di)ester wie. Z.B.: Dimethylitaconat, Monomethylitaconat, Diethylitaconat, Monoethylitaconat, Monopoly(oxyalkylenmonomethylether)itaconat, Di-poly(oxyalkylenmonomethylether)itaconat, Itaconsäureamid wie z.B.: mono-Methylpolyoxyalkylenitaconamid, 2,4-Hexandiensäure
- Vinylische Schwefelverbindungen
- N-Vinylamide wie z.B.: 1-Vinyl-2-pyrrolidon, 1-Vinyl-2-piperidin, 1-Vinyl-2-caprolactam, 5-Vinylcarbazol, 2-Methyl-5-Vinylpyridin, N-Vinylacetamid, N-Vinylformamid
- Alkene und deren Derivate: 2-Buten-1,4-diol (sowie dessen Polyoxyalkylate), 3,4-Dihydroxy-1-buten (sowie dessen Polyoxyalkylate), Dimethylvinylcarbinol (sowie dessen Polyoxyalkylate), Prenol (sowie dessen Polyoxyalkylate), 3-Methyl-3-Buten-2-ol (sowie dessen Polyoxyalkylate).

Bevorzugte Comonomere sind: Hydroxyethyl(meth)acrylat, Hydroxypropyl(meth)acrylat, (Meth)acrylamid, (C1-C4)-alkyl(meth)acrylate, Styrol, Vinylacetat, Acrolein, N-Vinylformamid, Vinylpyrrolidon, (Meth)allylalkohol, Isoprenol, 1-Butylvinylether, Isobutylvinylether, Aminopropyvinylether, Ethylenglykolmonovinylether, 4-Hydroxybutylmonovinylether, (Meth)acrolein, Crotonaldehyd, Dibutylmaleat, Dimethylmaleat, Diethylmaleat, Dipropylmaleat, Acrylsäure, Maleinsäure, Maleinsäureanhydrid, Methacrylsäure.

Die Molgewichte der durch radikalische Copolymerisation erhältlichen Copolymere liegen im allgemeinen im Bereich von 2.500 bis 100 000 g/mol.

Die Herstellung der durch radikalische Copolymerisation erhältlichen Copolymere erfolgt in bekannter Weise, beispielsweise wie beschrieben in Principles of Polymerization, George Odian, John Wiley & Sons, 2004 und Hans-Georg Elias, Makromoleküle, 6. Auflage, Band 1, 1999.

Nach einer Ausführungsform enthalten die erfindungsgemäßen Additive keine Zubereitung, bei der das Metallkation $Ca^{2+}$, das Anion Aluminat und das polymere sulfonierte Dispergiermittel ein ß-Naphthalinsulfonat-Formaldehyd-Kondensat ist.

Nach einer weiteren Ausführungsform enthalten die polymeren sulfonierten Dispergiermittel keine Polyethylenseitenketten.

Nach einer weiteren Ausführungsform enthalten die Kammpolymere keine Einheiten mit Sulfonsäuregruppen oder Sulfonatgruppen.

Das Additiv für hydraulisch abbindende Massen kann zusätzlich wenigstens ein Neutralisierungsmittel umfassen.

Bevorzugt ist das Neutralisierungsmittel ein organisches Amin, ein Polyamin oder Ammoniak, da diese Neutralisierungmittel die Koagulation von ausfallendem Salz effizienter verhindern. Geeignete organische Amine sind insbesondere ein aliphatisches Monoamin oder aliphatisches Polyamin. Polyamine sind auch Diamine und Triamine.

Das Neutralisierungsmittel ist bevorzugt ausgewählt unter Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetrahydroxy-$C_1$-$C_4$-alkyl)- $C_1$-$C_4$-alkylendiaminen, Polyethyleniminen, Polypropyleniminen und Gemischen davon.

Besonders bevorzugt ist das Neutralisierungsmittel ausgewählt unter Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alkylendiaminen, und Polyethyleniminen.

Insbesondere bevorzugte Neutralisierungsmittel sind ausgewählt unter Ammoniak, Ethylendiamin, Monoethanolamin, Diethanolamin, Triethanolamin und Polyethyleniminen.

Vorzugsweise weist das Additiv für hydraulisch abbindende Massen einen pH-Wert von 2 bis 13, vorzugsweise

6 bis 12, insbesondere 9-11.5, auf.

Das Additiv kann zusätzlich mindestens ein polymeres Dispergiermittel (Kammpolymer) enthalten, das anionische und/oder anionogene Gruppen und Polyetherseitenketten umfasst.

Bei den anionischen und anionogenen Gruppen handelt es sich vorzugsweise um Carboxyl-, Carboxylat-, oder Phosphatgruppen, Hydrogenphospat- oder Dihydrogenphosphatgruppen.

In einer Ausführungsform weist das Kammpolymer zumindest eine Struktureinheit der oben definierten allgemeinen Formeln (Ia), (Ib), (Ic) und/oder (Id) auf, wobei die Struktureinheiten (Ia), (Ib), (Ic) und (Id) sowohl innerhalb einzelner Polymermoleküle, als auch zwischen verschiedenen Polymermolekülen gleich oder verschieden sein können.

Besonders bevorzugt handelt es sich bei der Struktureinheit nach Formel Ia um eine Methacrylsäure- oder Acrylsäure-Einheit, bei der Struktureinheit nach Formel Ic um eine Maleinsäureanhydrid-Einheit und bei der Struktureinheit nach Formel Id um eine Maleinsäure- oder eine Maleinsäuremonoester-Einheit.

Soweit die Monomere (I) Phosphorsäureester oder Phosphonsäureester sind, können sie auch die entsprechenden Di- und Triester sowie den Monoester der Diphosphorsäure umfassen. Diese entstehen im allgemeinen bei der Veresterung von organischen Alkoholen mit Phosphorsäure, Polyphosphorsäure, Phosphoroxiden, Phosphorhalogeniden oder Phosphoroxyhalogeniden bzw. den entsprechenden Phosphonsäureverbindungen neben dem Monoester in unterschiedlichen Anteilen, beispielsweise 5-30 Mol-% Diester und 1-15 Mol-% Triester sowie 2-20 Mol-% des Monoesters der Diphosphorsäure.

In einer Ausführungsform weist das Kammpolymer zumindest eine Struktureinheit der oben definierten allgemeinen Formeln (IIa), (IIb), (IIc) und/oder (IId) auf. Die allgemeinen Formeln (IIa), (IIb), (IIc) und (IId) können sowohl innerhalb einzelner Polymermoleküle, als auch zwischen verschiedenen Polymermolekülen gleich oder verschieden sein. Alle Struktureinheiten A in den genannten Formeln können sowohl innerhalb einzelner Polyetherseitenketten, als auch zwischen verschiedenen Polyetherseitenketten gleich oder verschieden sein.

Besonders bevorzugt handelt es sich bei der Struktureinheit nach Formel IIa um eine alkoxylierte Isoprenyl-, alkoxylierte Hydroxybutylvinylether-, alkoxylierte (Meth)allylalkohol-, oder um eine vinylierte Methylpolyalkylenglykol-Einheit, jeweils vorzugsweise mit einem arithmetischen Mittel von 2 bis 350 Oxyalkylengruppen.

Gemäß einer Ausführungsform enthält das Kammpolymer die Struktureinheiten der Formeln (I) und (II). Neben den Struktureinheiten der Formeln (I) und (II) kann das polymere Dispergiermittel auch weitere Struktureinheiten enthalten, die sich von radikalisch polymerisierbaren Monomeren ableiten, wie Hydroxyethyl(meth)acrylat, Hydroxypropyl(meth)acrylat, (Meth)acrylamid, ($C_1$-$C_4$)-alkyl(meth)acrylate, Styrol, Styrolsulfonsäure, 2-Acrylamido-2-methylpropansulfonsäure, (Meth)allylsulfonsäure, Vinylsulfonsäure, Vinylacetat, Acrolein, N-Vinylformamid, Vinylpyrrolidon, (Meth)allylalkohol, Isoprenol, 1-Butylvinylether, Isobutylvinylether, Aminopropyvinylether, Ethylenglykolmonovinylether, 4-Hydroxybutylmonovinylether, (Meth)acrolein, Crotonaldehyd, Dibutylmaleat, Dimethylmaleat, Diethylmaleat, Dipropylmaleat, etc.

Das durch Gelpermeationschromatographie (GPC) bestimmte mittlere Molekulargewicht $M_w$ des Salzes aus mehrwertigem Metallkation und polymerem sulfoniertem Dispergiermittel und/oder des Kammpolymers liegt im allgemeinen im Bereich von etwa 2.500 bis etwa 1 000 000 g/mol.

Das durch Gelpermeationschromatographie (GPC) bestimmte mittlere Molekulargewicht $M_w$ des polymeren sulfonierten Dispergiermittels und/oder des Kammpolymers, beträgt vorzugsweise 1.000 bis 80,000 g/mol, und ganz besonders bevorzugt 5,000 bis 70,000 g/mol. Die Bestimmung des Molekulargewichts erfolgte wie unten näher beschrieben.

Vorzugsweise erfüllen das polymere sulfonierte Dispergiermittel und/oder das Kammpolymer die Anforderungen der Industrienorm EN 934-2 (Februar 2002).

Die Herstellung der Kammpolymere, welche die Struktureinheiten (I) und (II) enthalten, erfolgt in üblicher Weise, beispielsweise durch radikalische Polymerisation. Sie ist z. B. beschrieben in EP0894811, E P 1851256, EP2463314, EP0753488.

In einer Ausführungsform ist das Kammpolymer ein Polykondensationsprodukt, das die oben definierten Struktureinheiten (III) und (IV) umfasst.

Die Struktureinheiten T und D in den allgemeinen Formeln (III) und (IV) des Polykondensationsprodukts sind vorzugsweise abgeleitet von Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl, Phenoxyessigsäure, Salicylsäure, vorzugsweise von Phenyl, wobei T und D unabhängig voneinander gewählt werden können und auch jeweils von einer Mischung der genannten Reste abgeleitet sein können. Die Gruppen B und E stehen unabhängig voneinander vorzugsweise für O. Alle Struktureinheiten A können sowohl innerhalb einzelner Polyetherseitenketten, als auch zwischen verschiedenen Polyetherseitenketten gleich oder verschieden sein. A steht in einer besonders bevorzugten Ausführungsform für $C_2H_4$.

In der allgemeinen Formel (III) steht a vorzugsweise für eine ganze Zahl von 1 bis 300 und insbesondere 5 bis 150, und in der allgemeinen Formel (IV) steht b vorzugsweise für eine ganze Zahl von 1 bis 300, insbesondere 1 bis 50 und besonders bevorzugt 1 bis 10. Weiterhin können die Reste der allgemeinen Formeln (III) oder (IV) unabhängig

voneinander jeweils die gleiche Kettenlänge besitzen, wobei a und b jeweils durch eine Zahl repräsentiert wird. Es wird dabei in der Regel zweckmäßig sein, wenn jeweils Mischungen mit unterschiedlichen Kettenlängen vorliegen, so dass die Reste der Struktureinheiten im Polykondensationsprodukt für a und unabhängig für b unterschiedliche Zahlenwerte aufweisen.

Im allgemeinen weist das Polykondensationsprodukt ein gewichtsmittleres Molekulargewicht von 5.000 g/mol bis 200.000 g/mol, vorzugsweise 10.000 bis 100.000 g/mol und besonders bevorzugt 15.000 bis 55.000 g/mol auf.

Das Molverhältnis der Struktureinheiten (III):(IV) beträgt typischerweise 4:1: bis 1:15 und vorzugsweise 2:1 bis 1:10. Es ist vorteilhaft, über einen relativ hohen Anteil an Struktureinheiten (IV) im Polykondensationsprodukt zu verfügen, da eine verhältnismäßig hohe negative Ladung der Polymere einen guten Einfluss auf die Stabilität der wässrigen kolloid-dispersen Zubereitung hat. Das Molverhältnis der Struktureinheiten (IVa):(IVb), wenn beide enthalten sind, beträgt typischerweise 1:10 bis 10:1 1 und vorzugsweise 1:3 bis 3:1.

In einer bevorzugten Ausführungsform enthält das Polykondensationsprodukt eine weitere Struktureinheit (V), die durch die folgende Formel repräsentiert wird:

(V)

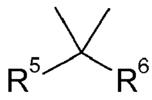

worin

- $R^5$ für H, $CH_3$, COOH oder substituiertes oder unsubstituiertes Phenyl oder substituiertes oder unsubstituiertes Naphthyl steht;
- $R^6$ H, $CH_3$, COOH oder substituiertes oder unsubstituiertes Phenyl oder substituiertes oder unsubstituiertes Naphthyl steht.

Vorzugsweise stehen $R_5$ und $R_6$ für H oder einer der Reste $R_5$ und $R_6$ steht für H und der andere für $CH_3$.

Typischerweise sind $R^5$ und $R^6$ in Struktureinheit (V) gleich oder verschieden und stehen für H, COOH und/oder Methyl. Ganz besonders bevorzugt ist H.

In einer anderen Ausführungsform beträgt das Molverhältnis der Struktureinheiten [(III) + (IV)]: (V) im Polykondensat 2:1 bis 1:3, bevorzugt 1:0,8 bis 1:2.

Die Polykondensate werden typischerweise nach einem Verfahren hergestellt, bei dem man die Verbindungen miteinander umsetzt, die den Struktureinheiten (III), (IV) und (V) zugrundeliegen. Die Herstellung der Polykondensate ist beispielsweise beschrieben in WO 2006/042709 und WO 2010/026155.

Vorzugsweise ist das Monomer mit einer Ketogruppe ein Aldehyd oder Keton. Beispiele für Monomere der Formel (V) sind Formaldehyd, Acetaldehyd, Aceton, Glyoxylsäure und/oder Benzaldehyd. Formaldehyd ist bevorzugt.

Das Kammpolymer kann auch in Form seiner Salze, wie beispielsweise des Natrium-, Kalium-, organischen Ammonium-, Ammonium- und/oder Calciumsalzes, vorzugsweise als Natrium- und/oder Calciumsalz, vorliegen.

Bevorzugt enthalten die Additive 50 bis 95 % Wasser und 5 bis 50% Feststoff, besonders bevorzugt 45-85 % Wasser und 15 bis 45% Feststoff. Der Feststoff umfasst dabei das sulfonierte Polymer sowie das erfindungsgemäße Metallkationsalz das Anionensalz, dessen Anion mit dem mehrwertigen Metallkation ein schwerlösliches Salz bildet,

Das erfindungsgemäße Additiv kann als wässriges Produkt in Form einer Lösung, Emulsion oder Dispersion oder in fester Form, beispielsweise als Pulver, nach einem Trocknungsschritt, vorliegen. Der Wassergehalt des Additivs in fester Form beträgt dann bevorzugt weniger als 10 Gew. %, besonders bevorzugt weniger als 5 Gew. %. Es ist auch möglich, einen Teil des Wassers, vorzugsweise bis zu 10 Gew. %, durch organische Lösungsmittel zu ersetzen. Vorteilhaft sind Alkohole wie Ethanol, (Iso)propanol und 1-Butanol, einschließlich seiner Isomere. Auch Aceton kann verwendet werden. Durch den Einsatz der organischen Lösungsmittel lassen sich die Löslichkeit und damit das Kristallisationsverhalten der erfindungsgemäßen Salze beeinflussen.

Die Herstellung der erfindungsgemäßen Additive erfolgt durch Kontaktieren des Salzes des Metallkations, des Anions und des polymeren Dispergiermittels in wässrigem Medium, in fester Form oder in einer Polymerschmelze. Vorzugsweise verwendet man ein wasserlösliches Salz des mehrwertigen Metallkations. Das Salz des Metallkations kann in fester Form, zweckmäßig aber als wässrige Lösung oder Suspension bereitgestellt werden. Es ist daher möglich, das Metallkationsalz als Pulver, als wässrige Lösung oder auch als wässrige Aufschlämmung zu einer wässrigen Lösung eines Dispergiermittels zu geben.

Das wasserlösliche Anionsalz kann ebenfalls sowohl in fester Form eingesetzt werden (in-situ Herstellung einer Lösung, bzw. Kontaktieren mit der Polymerschmelze), als auch bevorzugt in Form einer wässrigen Lösung verwendet werden.

Ein erfindungsgemäßes Additiv für hydraulisch abbindende Massen kann dadurch erhalten werden, dass man

das Salz des Metallkations in Gegenwart des polymeren sulfonierten Dispergiermittels fällt, wobei man eine kolloid-disperse Zubereitung des Salzes erhält. Mit der Fällung des Salzes des Metallkations ist hier die Bildung von kolloid-dispersen Salzpartikeln bezeichnet, die durch das polymere sulfonierte Dispergiermittel dispergiert werden und deren weitere Koagulation verhindert wird.

Unabhängig davon, ob man das Salz des Metallkations in Gegenwart des polymeren sulfonierten Dispergiermittels fällt oder ob man ein frisch gefälltes Salz des Metallkations in Gegenwart des polymeren sulfonierten Dispergiermittels dispergiert, kann das erfindungsgemäße Additiv für hydraulisch abbindende Massen alternativ auch dadurch erhalten werden, dass man die Zubereitung zusätzlich mit einem wie oben beschriebenen Neutralisierungsmittel versetzt.

Ein erfindungsgemäßes Additiv für hydraulisch abbindende Massen kann auch dadurch erhalten werden, dass man ein Hydroxid und/oder Oxid des mehrwertigen Metallkations mit einer Säure behandelt, um eine kolloid-disperse Zubereitung des Salzes des mehrwertigen Metallkations zu erhalten, wobei die Säure vorzugsweise unter Borsäure, Kohlensäure, Oxalsäure, Kieselsäure, Polyphosphorsäure, Phosphorsäure, Phosphoriger Säure, einem Hexaquokomplex von $Al^{3+}$ und/oder einem Hexaquokomplex von $Fe^{3+}$ ausgewählt ist.

Die Herstellung des Additivs erfolgt im Allgemeinen durch Vermischen der Komponenten, die vorzugsweise als wässrige Lösung vorliegen. Vorzugsweise werden dabei zunächst das polymere sulfonierte Dispergiermittel und das Metallkation vermischt und anschließend wird das Anion, das mit dem Metallkation ein schwerlösliches Salz zu bilden vermag, zugegeben. Nach einer anderen Ausführungsform werden zunächst das polymere sulfonierte Dispergiermittel und das Anion, das mit dem Metallkation ein schwerlösliches Salz zu bilden vermag, vermischt und anschließend wird das Metallkation zugegeben. Zur Einstellung des pH-Wertes kann dann eine Säure oder Base zugegeben werden. Das Vermischen der Komponenten erfolgt im Allgemeinen bei einer Temperatur im Bereich von 5 bis 80°C, zweckmäßig 10 bis 40°C und insbesondere bei Raumtemperatur (ca. 20-30°C).

Ein erfindungsgemäßes Additiv für hydraulisch abbindende Massen kann auch dadurch erhalten werden, dass man ein frisch gefälltes Salz des Metallkations in Gegenwart des polymeren sulfonierten Dispergiermittels dispergiert, um eine kolloid-disperse Zubereitung des Salzes zu erhalten. Unter frisch gefällt ist hier unmittelbar im Anschluss an die Fällung, d.h. innerhalb von etwa 5 Minuten, vorzugsweise 2 oder 1 Minute, zu verstehen.

Die Herstellung kann kontinuierlich oder diskontinuierlich erfolgen. Das Vermischen der Komponenten erfolgt im Allgemeinen in einem Reaktor mit mechanischem Rührwerk. Die Rührgeschwindigkeit des Rührwerks kann dabei zwischen 10 rpm und 2000 rpm liegen. Es ist aber auch möglich, die Lösungen mit Hilfe eines Rotor-Stator Mischers zu vermischen, welcher Rührgeschwindigkeiten im Bereich von 1000 bis 30.000 rpm aufweisen kann. Weiterhin können auch andere Mischgeometrien zur Anwendung kommen, wie z.B. ein kontinuierlicher Prozess bei dem die Lösungen über einen Y-Mischer vermischt werden.

Gegebenenfalls kann sich ein weiterer Verfahrensschritt zur Trocknung des Additivs anschließen. Die Trocknung kann erfolgen durch Walzentrocknung, Sprühtrocknung, Trocknung im Wirbelbettverfahren, durch Substanztrocknung bei erhöhter Temperatur oder sonstige übliche Trocknungsverfahren. Der bevorzugte Bereich der Trocknungstemperatur liegt zwischen 50 und 230 °C.

Das erfindungsgemäße Additiv für hydraulisch abbindende Massen kann als Slump retainer (Slump retainer) in wasserhaltigen Baustoffmischungen, die ein hydraulisches Bindemittel enthalten, verwendet werden, wobei das hydraulische Bindemittel ausgewählt ist unter (Portland)zement, Hüttensand, Flugasche, Silikastaub, Metakaolin, natürlichen Puzzolanen, gebranntem Ölschiefer, Calcium-Aluminat-Zement, sowie Bindemittel auf Basis von Calciumsulfat wie $\alpha$-Halbhydrat, $\alpha/\beta$-Halbhydrat, $\beta$-Halbhydrat, natürliches Anhydrit, synthetisches Anhydrit, aus der Rauchgasentschwefelung erhaltenes Anhydrit und/oder Mischungen zweier oder mehrerer dieser Komponenten.

Unter dem Begriff des Slump retainers ist in dieser Anmeldung zu verstehen, dass die Additive über eine Verarbeitungszeit von bis zu 90 Minuten, bevorzugt bis zu 60 Minuten, nach Vermischen der Baustoffmischung mit Wasser ein möglichst für die Bedingungen des jeweiligen Anwendungsfalls ausreichendes, möglichst hohes und insbesondere über den vorstehend genannten Zeitraum im Wesentlichen nicht abfallendes Setzmaß der Bindemittelsuspension bewirken. Die Additive ermöglichen es, ein für die jeweilige Anwendung maßgeschneidertes Eigenschaftsprofil einzustellen. Außerdem ist es möglich, das Additiv nicht erst bei der Mörtel- oder Betonherstellung sondern bereits bei der Zementherstellung zuzugeben. Es erfüllt dann gleichzeitig die Funktion eines Mahlhilfsmittels.

Die Betonadditive können zusätzlich zur erfindungsgemäßen kolloid-dispersen Zubereitung aus polymerem sulfoniertem Dispergiermittel, Metallkation und Anion noch weitere Komponenten enthalten. Diese weiteren Komponenten umfassen wasserreduzierende Fließmittel wie z.B. konventionelle Polycarboxylatether, sowie Entschäumer, Luftporenbildner, Verzögerer, Schwundreduzierer und/oder Erhärtungsbeschleuniger.

Die Erfindung betrifft auch eine Baustoffmischung, die mindestens ein erfindungsgemäßes Additiv und mindestens ein Bindemittel enthält. Das Bindemittel ist vorzugsweise ausgewählt unter (Portland)zement, Hüttensand, Flugasche, Silikastaub, Metakaolin, natürlichen Puzzolanen, gebranntem Ölschiefer, Calcium-Aluminat-Zement, sowie Bindemittel auf Basis von Calciumsulfat wie $\alpha$-Halbhydrat, $\alpha/\beta$-Halbhydrat, $\beta$-Halbhydrat, natürliches Anhydrit, synthetisches Anhydrit, aus der Rauchgasentschwefelung erhaltenes Anhydritund/oder Gemischen davon. Weiter kann die Baustoffmischung übliche Bestandteile enthalten, wie Härtungsbeschleuniger, Härtungsverzögerer, Clay modifier,

Schrumpfreduzierer, Korrosionsinhibitoren, Mittel zur Erhöhung der Festigkeit, Wasserreduzierer etc.

Die Dosierung an erfindungsgemäßem Additiv beträgt im allgemeinen 0.1 bis 5 Gew.-% als Feststoff, und bezogen auf den Zementgehalt der Baustoffmischung. Dabei kann die Dosierung als wässrige kolloid-disperse Zubereitung erfolgen oder als getrockneter Feststoff, z.B. in Form eines Pulvers.

**Beispiele**

**Allgemeine Synthese Vorschrift:**

Verwendete Polymere: das Melamin-Formaldehyd-Sulfit Kondensat Melment L10 und das β-Naphthalinsulfonat-Formaldehyd-Kondensat Melcret 500L sind kommerzielle Produkte der BASF Construction Solutions GmbH, Na-Ligninsulfonat ($M_w$ 52 kDa, $M_n$ 7 kDa) wurde von Sigma-Aldrich erworben. Das sulfonierte Aceton-Formaldehyd-Kondensat (AFS) wurde wie folgt synthetisiert:

35,0 g Natriumsulfit werden in 50 g Wasser in einem Dreihalskolben mit Rückflussintensivkühler vorgelegt und gut verrührt. Anschließend werden 29 g Aceton zugegeben. Die Lösung wir auf 56°C erwärmt. Anschließend werden 117 g 37%-ige Formaldehydlösung langsam zugetropft, sodass die Temperatur 60°C nicht überschreitet. Nach Ende der Zugabe Wird die Lösung auf 90°C erwärmt und 1 Stunde bei dieser Temperatur gerührt. Nach dem Abkühlen wird mit 50% iger Natronlauge neutralisiert. Es wird eine rotbraune 40%-ige Lösung erhalten. Das Molgewicht beträgt 19.000 g/mol.

Die Ladungsdichte wird aus den Einwaagen berechnet, also n($SO3^-$) = 35 g / 126.04 g/mol = 0,278 mol; somit 0,278 mol Ladungen auf einen Gesamtfeststoff von 35.0 g + 29 g + 117*0,37 = 107,3 g ergibt eine Ladungsdichte von 0.278 mol / 107,3 g = 2,59 mmol/g.

Die Ladungsdichte von Na-Ligninsulfonat wurde basierend auf der idealisierten Strukturformel des nachfolgend angegebenen Monomers des Ligninsulfonats berechnet (nach P. R. Gupta, J. L. McCarthy, Macromolecules 1968, 1, 495-498). Somit ergibt sich mit $z_{S,Sulfonat}$ = 1 die Ladungsdichte 3,76 mmol/g Polymer.

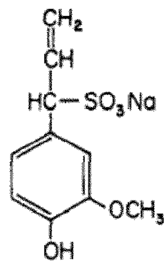

Tab. 1: Physikalische Daten der Referenzpolymere

| | V1 | V2 | V3 |
|---|---|---|---|
| | Melment L10 | Na-Ligninsulfonat | Aceton-Kondensat (AFS) |
| $\sum_j z_{\Sigma,\varphi} \times n_{s,j}$ in mmol pro Gramm Polymer | 4,29 | 3,76 | 2,59 |

Allgemeine Vorschrift zur Synthese der Additive

Die wässrigen Lösungen der Polymere werden mit den erfindungsgemäßen Metallkationsalzen, den erfindungsgemäßen Anionenverbindungen, sowie ggf. einer Base oder Säure zum Anpassen des pH Werts unter Rühren vermischt. Die Vermischung wird in einem bei 20°C temperierten 1l Doppelmantel-Glasreaktor mit Flügelrührer mit 300 U/min durchgeführt. Die Reihenfolge der Zugabe ist in der Tabelle 2 durch einen Buchstabencode angegeben. P steht für die wässrige Lösung des Polymers, K für das erfindungsgemäße Metallkationsalz, A für die erfindungsgemäße Anionverbindung und B bzw. S für Base bzw. Säure. Die Mengen beziehen sich immer auf die Feststoffgehalte. Der finale pH Wert der resultierenden Lösungen bzw. Suspensionen ist ebenfalls angegeben.

Die Dosierungen der jeweiligen Komponenten können schnell erfolgen, also mit einer Dosiergeschwindigkeiten im Bereich von kg/s (z.B. durch schnelles Zufügen eines Becherglases mit einer wässrigen Lösung der jeweiligen Komponente) oder die jeweiligen Komponenten können langsam dosiert werden durch kontrollierte Dosierung z.B. durch eine Perfusorpumpe im Bereich von g/h.

Tab. 2: Zusammensetzung der Additive

| Nr | Polymer | Metall-Salz | Anion-Verb. | Base/Säure | pH | Reihen-folge | Wasser (Gew%) | Polymer (Gew%) | Metall-Salz (Gew%) | Anion-Verb. (Gew%) | Base/Säure (Gew%) | $\frac{\sum_i z_{K,i} * n_{K,i}}{\sum_j z_{S,j} * n_{S,j}}$ | $\frac{\sum_l z_{A,l} \times n_{A,l}}{\sum_j z_{K,i} \times n_{K,i}}$ |
|---|---|---|---|---|---|---|---|---|---|---|---|---|---|
| **1** | Ligninsul-fonat | $Ca(NO_3)_2$ | $NaAlO_2$ | - | 10,2 | PKA | 87,3 | 6,5 | 4,9 | 1,2 | - | 2,44 | 0,25 |
| **2** | Melment L10 | $Ca(NO_3)_2$ | $NaAlO_2$ | $HNO_3$ | 11,1 | PKAS | 75,8 | 9,3 | 9,8 | 4,9 | 0,2 | 3 | 0,5 |
| **3** | AFS | $Ca(NO_3)_2$ | $NaAlO_2$ | $HNO_3$ | 10,5 | PKAS | 69,7 | 15,3 | 9,7 | 4,9 | 0,4 | 3 | 0,5 |
| **4** | AFS | $Ca(NO_3)_2$ | $NaAlO_2$ | $HNO_3$ | 12,0 | PKAS | 79,1 | 11,8 | 5,0 | 3,8 | 0,3 | 2 | 0,75 |
| **5** | AFS | $Ca(NO_3)_2$ | $NaAlO_2$ | HN03 | 11,1 | PKAS | 74,1 | 11,8 | 10,0 | 3,8 | 0,3 | 4 | 0,38 |
| **6** | AFS | $Ca(NO_3)_2$ | $NaAlO_2$ | $HNO_3$ | 10,5 | PKAS | 79,2 | 11,8 | 7,5 | 1,3 | 0,2 | 3 | 0,17 |
| **7** | AFS | $Sr(NO_3)_2$ | $NaAlO_2$ | HN03 | 11,4 | PKAS | 77,5 | 7,6 | 7,9 | 2,4 | 4,6 | 3 | 0,5 |
| **8** | AFS | $Zn(NO_3)_2$ | $NaAlO_2$ | NaOH | 10,2 | PKAB | 68,9 | 12,1 | 13,9 | 3,8 | 1,3 | 3 | 0,5 |
| **9** | AFS | $Mg(NO_3)_2$ | $NaAlO_2$ | NaOH | 10,5 | PKAB | 77,4 | 12,0 | 7,9 | 1,3 | 1,4 | 2 | 0,25 |
| **10** | AFS | $Al(NO_3)_3$ | $H_3PO_4$ | $NH_4OH$ | 4 | PKAB | 69,4 | 11,7 | 17,1 | 0,7 | 1,1 | 4,5 | 0,17 |

## Anwendungstests

Mörteltests

Als Mörteltests wurden Standardmörteltests nach DIN EN 1015 mit Bernburg Zement CEM I 42.5 R und einem w/z Wert von 0.42 verwendet. Das Gewichtsverhältnis von Sand zu Zement betrug 2.2 zu 1. Es wurde eine Mischung aus 70-Gew.% Normensand (Normensand GmbH, D-59247 Beckum) und 30 Gew.% Quarzsand verwendet. Vor der Austestung im Mörtel wurden die Polymerproben mit 1-Gew.% Trüsobutylphosphat bezogen auf den Polymerfeststoffgehalt entschäumt.

Das Ausbreitmaß erhält man, indem der Ausbreittisch, gemäß dem o.g. DIN-Verfahrens, durch 15-maliges Anheben und Aufstoßen erschüttert wird. Die durch das Klopfen auftretenden Scherkräfte bewirken ein weiteres Ausbreiten des Mörtels. Der Durchmesser des Mörtelkuchens nach dem Klopfen wird als Ausbreitmaß bezeichnet.

Die angegebenen Dosierungen beziehen sich immer auf den Feststoffgehalt der eingesetzten Polymersuspensionen, nicht auf den Aktivgehalt an Polymer.

Tab. 3: Mörtelergebnisse, Bernburg Zement, w/z 0.42

| Additiv Nr. | Basis-polymer | Dos. [%] | Ausbreitmaß [cm] | | | | | Delta 30-4 [cm] | Delta 60- 4 [cm] |
|---|---|---|---|---|---|---|---|---|---|
| | | | 4 min | 10 min | 30 min | 60 min | 90 min | | |
| V1 | Melment L10 | 0,5 | 28.9 | 27.1 | 24.3 | 21.7 | | -4,6 | -7,2 |
| V2 | Na-Ligninsulfonat | 0,6 | 25.3 | 24.2 | 19.8 | | | -5,5 | |
| V3 | AFS | 0,5 | 26.8 | 25.4 | 22.4 | 20.6 | 19.7 | -4,4 | -6,2 |
| | | | | | | | | | |
| 1 | Na-Ligninsulfonat | 2,5 | 16.5 | 18.2 | 19.8 | 19.7 | | | +3,2 |
| 2 | Melment L10 | 2,2 | 17.4 | 26.4 | 27.5 | 25.3 | 22.7 | +10,1 | +7,9 |
| 3 | AFS | 1,5 | 17.1 | 26 | 27.8 | 25.1 | 22.5 | +10,7 | +8,0 |
| 4 | AFS | 1,7 | 17,9 | 26,8 | 27,3 | 24,2 | 22,7 | +9,4 | |
| 5 | AFS | 1,7 | 17 | 26,8 | 27,9 | 25 | 22,2 | +10,9 | +8,0 |
| 6 | AFS | 1,2 | 23,7 | 29,2 | 28,3 | 25,5 | 23,3 | +4,6 | +1,8 |
| 7 | AFS | 1,5 | 17,7 | 24,6 | 25 | 23,3 | 21,6 | +7,3 | +5,6 |
| 8 | AFS | 1,7 | 18,5 | 22,9 | 20 | | | +1,5 | |
| 9 | AFS | 2,0 | 14,2 | 14,4 | 14,8 | | | +0,6 | |
| 10 | AFS | 1,5 | 16,7 | 17,2 | 17,8 | 17,2 | 17 | +1,1 | +0,5 |

Betontests

Als Betontests wurden Standardbetontests nach DIN EN 12350 mit einem ZementGehalt von 380 kg durchgeführt. Die eingestellte Sieblinie entspricht der Klassifizierung A/B 16 gemäß DIN 1045-2. Bei dem verwendeten Zement handelte es sich um Bernburg CEM I 42.5 R mit w/z von 0.44. Vor der Austestung im Beton wurden die Polymerproben mit 1-Gew.% Trüsobutylphosphat bezogen auf den Polymerfeststoffgehalt entschäumt.

Mischprozess

Die getrockneten Zuschläge gemäß Sieblinie und der Zement werden in einen Zwangsmischer vorgelegt und für 10 Sekunden vermischt. Danach wird die Mischung im Zwangsmischer mit 10% des Gesamtwassers angefeuchtet und für weitere 2 Minuten gemischt. Anschließend wird das restliche Wasser zugegeben und es wird für eine weitere Minute gemischt. Schließlich wird das erfindungsgemäße Additiv zugegeben, woraufhin erneut für 1 Minute gemischt wird.

Der Slump-Wert ist ein Maß dafür, wie stark der Betonkuchen nach dem Abheben des Metallkonus kollabiert (Höhendifferenz zwischen der Oberkante des Metallkonus und der Höhe des Betonkuchens nach dem Abziehen der

Metallform). Der Slump-flow entspricht dem Basisdurchmesser des Betonkuchens nach dem Zusammensacken.

Das Ausbreitmaß erhält man, indem der Ausbreittisch, gemäß dem vorstehend genannten DIN-Verfahren, durch 15-maliges Anheben und Aufstoßen erschüttert wird. Die durch das Klopfen auftretenden Scherkräfte bewirken ein weiteres Ausbreiten des Betons. Der Durchmesser des Betonkuchens nach dem Klopfen wird als Ausbreitmaß bezeichnet.

Die angegebenen Dosierungen beziehen sich immer auf den Feststoffgehalt der eingesetzten Polymersuspensionen, nicht auf den Aktivgehalt an Polymer.

Die Ergebnisse sind in der nachfolgenden Tabelle 4 zusammengestellt.

Tabelle 4: Ergebnisse der Betontests, Zement: Bernburg CEM I 42,5 R, w/z = 0.44

| Nr. | Fließmittel | Dos. % | Luft % | Slump (Setzmaß) in cm | | | | Slump flow (Fließmaß) in cm | | | | Ausbreitmaß in cm | | | | Delta Ausbreitmaß | | Druckfestigkeit 24 h |
|---|---|---|---|---|---|---|---|---|---|---|---|---|---|---|---|---|---|---|
| | | | | 0 min | 10 min | 30 min | 60 min | 0 min | 10 min | 30 min | 60 min | 0 min | 10 min | 30 min | 60 min | 10-0 min | 30-0 min | N/mm$^2$ |
| | Na-Ligninsulfonat | 0,65 | 1,40 | 19,0 | 14,5 | 6,5 | 4,0 | 30,0 | 27,0 | 21,0 | 20,0 | 51,0 | 47,0 | 43,0 | 37,0 | -4,0 | -8,0 | 3,65 |
| | Melment L10 | 0,5 | 1,70 | 21,0 | 16,0 | 5,0 | 2,0 | 36,5 | 28,0 | 20,5 | 20,0 | 56,0 | 49,0 | 42,5 | 38,0 | -7,0 | -13,5 | 26,45 |
| | AFS | 0,55 | 1,60 | 24,0 | 21,5 | 5,0 | 2,0 | 46,0 | 35,0 | 20,5 | 20,0 | 58,5 | 52,5 | 41,5 | 38,0 | -6,0 | -17,0 | 25,65 |
| | | | | | | | | | | | | | | | | | | |
| 1 | Na-Ligninsulfonat | 2,40 | 1,65 | 1.0 | 1.5 | 5.0 | 5.0 | 20.0 | 20.0 | 20.5 | 20.5 | 36.0 | 38.5 | 41.0 | 40.0 | +2,5 | +5,0 | - |
| 2 | Melment | 3.40 | 1.25 | 0,0 | 15,0 | 23,0 | 15,0 | 20,0 | 27,0 | 43,0 | 27,5 | 36 | 50,0 | 56,0 | 45,0 | +14.0 | +20.0 | 24,0 |
| 3 | AFS | 1,60 | 1.55 | 1.0 | 4.0 | 22.5 | 16.0 | 20.0 | 20.0 | 38.5 | 28.0 | 36.0 | 42.0 | 55.0 | 45.0 | +6.0 | +19.0 | 24,6 |

Wie die Mörtel- und Betonergebnisse zeigen, ergeben die erfindungsgemäß Additive durchweg längere Konsistenzhaltung, verglichen mit Additiven, welche die unmodifizierten sulfonierten polymeren Dispergiermittel enthalten.

Die Betonfestigkeiten nach 24h der erfindungsgemäß modifizierten Kammpolymere ist sehr ähnlich der Festigkeit der nicht modifizierten Referenz. Dies belegt die hervorragende Eignung der erfindungsgemäßen Zubereitungen als Slump Retainer mit sehr guter Frühfestigkeitsentwicklung.

## Patentansprüche

1. Additiv für hydraulisch abbindende Massen, umfassend eine **kolloid-disperse** Zubereitung wenigstens eines Salzes eines ein- oder mehrwertigen Metallkations, wenigstens einer Verbindung, die ein Anion freizusetzen vermag, das mit dem Metallkation ein schwerlösliches Salz bildet, und wenigstens eines polymeren sulfonierten Dispergiermittels, wobei das polymere sulfonierte Dispergiermittel ausgewählt ist unter sulfonierten Keton-Formaldehyd-Kondensaten, sulfonierten Melaminsulfonat-Formaldehyd-Kondensaten, Naphthalinsulfonat-Formaldehyd-Kondensaten, Ligninsulfonaten und sulfonierten durch radikalische Copolymerisation erhältlichen Copolymeren und
wobei das Metallkation ausgewählt ist unter $Ca^{2+}$, $Al^{3}+$, $Fe^{3+}$, $Fe^{2+}$, $Zn^{2+}$, $Mn^{2+}$, $Cu^{2+}$, $Mg^{2+}$, $Sr^{2+}$, $Ba^{2+}$, $Li^{+}$, und Gemischen davon, und wobei das Metallkation in solcher Menge vorliegt, dass sie folgender Bedingung (a) genügt:

$$0.1 < \frac{\sum_i z_{K,i} * n_{K,i}}{\sum_j z_{S,j} * n_{S,j}} < 30 \qquad \text{(a)}$$

wobei

$z_{K,i}$ für den Betrag der Ladungszahl des Metallkations steht,
$n_{K,i}$ für die Molzahl des eingewogenen Metallkations steht,
$z_{S,j}$ für den Betrag der Ladungszahl der im polymeren Dispergiermittel enthaltenen anionischen und anionogenen Gruppen,
$n_{S,j}$ für die Molzahl der im eingewogenen polymeren sulfonierten Dispergiermittel enthaltenen anionischen und anionogenen Gruppen steht

die Indices i und j voneinander unabhängig und eine ganze Zahl größer als 0 sind, wobei i für die Anzahl verschiedenartiger Metallkationen steht und j für die Anzahl verschiedenartiger im polymeren Dispergiermittel enthaltener anionischer und anionogener Gruppen steht.

2. Additiv nach Anspruch 1, wobei wenigstens ein Metallkation und wenigstens ein Anion in einer Menge vorliegen, die nach folgenden Formeln berechnet wird:

$$0.01 \leq \frac{\sum_l z_{A,l} \cdot n_{A,l}}{\sum_i z_{K,i} \cdot n_{K,i}} < 3 \qquad \text{(b)}$$

wobei

$z_{K,i}$ für den Betrag der Ladungszahl des Metallkations steht,
$n_{K,i}$ für die Molzahl des eingewogenen Metallkations steht,
$z_{A,l}$ für die Ladungszahl des eingewogenen Anions steht,
$n_{A,l}$ für die Molzahl des eingewogenen Anions steht,
die Indices iund l voneinander unabhängig und eine ganze Zahl größer als 0 sind, i für die Anzahl verschiedenartiger Metallkationen steht und l für die Anzahl verschiedenartiger Anionen, welche mit dem Metallkation ein schwerlösliches Salz bilden können, steht.

3. Additiv nach Anspruch 2 oder 3, wobei das Anion ausgewählt ist unter einem Aluminat, Phosphat und einem Silikat.

4. Additiv nach einem der vorhergehenden Ansprüche, wobei das Kation ausgewählt ist unter $Ca^{2+}$, $Al^{3+}$, $Fe^{3+}$ und $Mg^{2+}$.

5. Additiv nach einem der vorhergehenden Ansprüche, zusätzlich umfassend wenigstens ein Neutralisierungsmittel.

6. Additiv nach Anspruch 5, wobei das Neutralisierungsmittel ein organisches Monoamin, Polyamin, Ammoniak oder ein Alkalihydroxyd ist.

7. Additiv nach einem der vorhergehenden Ansprüche, das einen pH-Wert von 2 bis 13 aufweist.

8. Additiv nach einem der vorhergehenden Ansprüche, wobei das Additiv zusätzlich mindestens ein polymeres Dispergiermittel enthält, das anionische und/oder anionogene Gruppen und Polyethersseitenketten umfasst.

9. Additiv nach Anspruch 8, wobei das Gewichtsverhältnis von polymerem sulfoniertem Dispergiermittel zu dem polymeren Dispergiermittel, das anionische und/oder anionogene Gruppen und Polyethersseitenketten umfasst, im Bereich von 3:1 bis 1:3 liegt.

10. Additiv nach einem der vorhergehenden Ansprüche, dadurch erhältlich, dass man das Salz des mehrwertigen Metallkations in Gegenwart des polymeren sulfonierten Dispergiermittels fällt, um eine kolloid-disperse Zubereitung des Salzes zu erhalten oder
dadurch erhältlich, dass man ein frisch gefälltes Salz des mehrwertigen Metallkations in Gegenwart des polymeren sulfonierten Dispergiermittels dispergiert, um eine kolloid-disperse Zubereitung des Salzes zu erhalten.

11. Additiv nach Anspruch 10, wobei man die kolloid-disperse Zubereitung mit einem Neutralisierungsmittel versetzt.

12. Additiv nach einem der vorhergehenden Ansprüche, dadurch erhältlich, dass man ein Hydroxid und/oder Oxid des mehrwertigen Metallkations mit einer Säure peptisiert, um eine kolloid-disperse Zubereitung des Salzes des mehrwertigen Metallkations zu erhalten, wobei die Säure insbesondere ausgewählt ist unter Borsäure, Kohlensäure, Oxalsäure, Kieselsäure, Polyphosphorsäure, Schwefelsäure, Phosphorsäure, phosphorige Säure, einem Hexaquokomplex von $Al^{3+}$ und/oder einem Hexaquokomplex von $Fe^{3+}$.

13. Verfahren zur Herstellung des Additivs für hydraulisch abbindende Massen nach einem der Ansprüche 1 bis 12, wobei man das Salz des mehrwertigen Metallkations in Gegenwart des polymeren sulfonierten Dispergiermittels fällt, um eine kolloid-disperse Zubereitung des Salzes zu erhalten oder
wobei man ein frisch gefälltes Salz des mehrwertigen Metallkations in Gegenwart des polymeren sulfonierten Dispergiermittels dispergiert, um eine kolloid-disperse Zubereitung des Salzes zu erhalten.

14. Verwendung des Additivs für hydraulisch abbindende Massen nach einem der Ansprüche 1 bis 12 als Konsistenzhalter in wasserhaltigen Baustoffmischungen, die ein hydraulisches Bindemittel enthalten.

15. Verwendung nach Anspruch 14, wobei das hydraulische Bindemittel ausgewählt ist unter (Portland)zement, Hüttensand, Flugasche, Silikastaub, Metakaolin, natürlichen Puzzolanen, gebranntem Ölschiefer, Calcium-Aluminat-Zement, und Bindemitteln auf Basis von Calciumsulfat und/oder Mischungen zweier oder mehrerer dieser Komponenten.

16. Baustoffmischung, umfassend ein Additiv nach einem der Ansprüche 1 bis 12 und ein Bindemittel, ausgewählt unter (Portland)zement, Hüttensand, Flugasche, Silikastaub, Metakaolin, natürlichen Puzzolanen, gebranntem Ölschiefer und Calcium-Aluminat-Zement, und Bindemitteln auf Basis von Calciumsulfat und/oder Gemischen von zwei oder mehreren dieser Komponenten.

Europäisches Patentamt
European Patent Office
Office européen des brevets

# EUROPÄISCHER RECHERCHENBERICHT

Nummer der Anmeldung
EP 14 15 2156

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 2 687 498 A1 (CONSTR RES & TECH GMBH [DE]) 22. Januar 2014 (2014-01-22)<br>* das ganze Dokument *<br>----- | 1-16 | INV.<br>C04B24/26<br>C04B28/02 |
| A,D | WO 2009/004348 A2 (GRACE W R & CO [US]; HUGHES DAVID WILLIAM [GB]; NORRIS ERNIE [GB]) 8. Januar 2009 (2009-01-08)<br>* Ansprüche 1-6 *<br>----- | 1-16 | |
| A,D | US 7 879 146 B2 (RAKI LAILA [CA] ET AL) 1. Februar 2011 (2011-02-01)<br>* Ansprüche 1-17 *<br>----- | 1-16 | |
| A,D | EP 2 412 689 A2 (SILKROAD C & T CO LTD [KR]) 1. Februar 2012 (2012-02-01)<br>* Ansprüche 1-21 *<br>----- | 1-16 | |

RECHERCHIERTE SACHGEBIETE (IPC)
C04B

Der vorliegende Recherchenbericht wurde für alle Patentansprüche erstellt

1

| Recherchenort | Abschlußdatum der Recherche | Prüfer |
|---|---|---|
| Den Haag | 16. Juli 2014 | Burtan, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 14 15 2156

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-07-2014

| Im Recherchenbericht angeführtes Patentdokument | Datum der Veröffentlichung | Mitglied(er) der Patentfamilie | Datum der Veröffentlichung |
|---|---|---|---|
| EP 2687498 A1 | 22-01-2014 | EP 2687498 A1<br>WO 2014013077 A1 | 22-01-2014<br>23-01-2014 |
| WO 2009004348 A2 | 08-01-2009 | KEINE | |
| US 7879146 B2 | 01-02-2011 | CA 2554347 A1<br>US 2007022916 A1<br>US 2011083586 A1 | 01-02-2007<br>01-02-2007<br>14-04-2011 |
| EP 2412689 A2 | 01-02-2012 | BR PI1103482 A2<br>CN 102424542 A<br>EP 2412689 A2<br>KR 20120010336 A<br>SG 177829 A1<br>US 2012046393 A1 | 11-12-2012<br>25-04-2012<br>01-02-2012<br>03-02-2012<br>28-02-2012<br>23-02-2012 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009004348 A
- JP 57067057 A
- US 20130231415 A
- US 7879146 B2
- EP 2412689 A
- CN 101337785
- US 7879146 B
- DE 2609703
- CA 2172004 A1
- DE 4411797 A1
- US 4430469 A
- US 6555683 B
- CH 686186
- WO 2009103579 A
- EP 0894811 A
- EP 1851256 A
- EP 2463314 A
- EP 0753488 A
- WO 2006042709 A
- WO 2010026155 A


### In der Beschreibung aufgeführte Nicht-Patentliteratur


- *American Concrete Institute, SP,* 1997, 225-248
- *Guisuanyan Xuebao,* 2009, vol. 37 (7), 1103-1109
- *Zairyo,* 1987, vol. 36 (405), 617-23
- **J. PLANK et al.** *Cem. Conr. Res.,* 2009, vol. 39, 1-5
- Ullmann’s Encyclopedia of Industrial Chemistry. vol. A2, 131
- Concrete Admixtures Handbook - Properties, Science and Technology. 411, , 412
- Ullmann’s Encyclopedia of Industrial Chemistry. vol. A8, 586, , 587
- **J. PLANK et al.** *J. Appl. Poly. Sci.,* 2009, 2018-2024
- Concrete Admixtures Handbook - Properties, Science and Technology. 411-413
- Ullmann’s Encyclopedia of Industrial Chemistry. vol. A8, 587, , 588
- **GEORGE ODIAN.** Principles of Polymerization. John Wiley & Sons, 2004
- **HANS-GEORG ELIAS.** Makromoleküle. 1999, vol. 1
- **P. R. GUPTA ; J. L. MCCARTHY.** *Macromolecules,* 1968, vol. 1, 495-498